(19) Europäisches Patentamt
European Patent Office
Office européen des brevets

(11) **EP 2 849 314 A1**

(12) **EUROPEAN PATENT APPLICATION**
published in accordance with Art. 153(4) EPC

(43) Date of publication:
**18.03.2015 Bulletin 2015/12**

(51) Int Cl.:
***H02J 17/00*** (2006.01)     ***B60L 11/18*** (2006.01)

(21) Application number: **12876397.6**

(86) International application number:
**PCT/JP2012/061828**

(22) Date of filing: **09.05.2012**

(87) International publication number:
**WO 2013/168239 (14.11.2013 Gazette 2013/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toyota Jidosha Kabushiki Kaisha
Toyota-shi, Aichi 471-8571 (JP)**

(72) Inventors:
• **TANAKA, Junichi**
**Toyota-shi**
**Aichi 471-8571 (JP)**

• **YOSHI, Satoshi**
**Toyota-shi**
**Aichi 471-8571 (JP)**

(74) Representative: **Smith, Samuel Leonard**
**J A Kemp**
**14 South Square**
**Gray's Inn**
**London WC1R 5JJ (GB)**

(54) **VEHICLE CAPABLE OF CONTACT-FREE POWER RECEPTION**

(57)     A vehicle capable of contactlessly receiving electric power is directed to suppress an electrical device carried by an operator from being affected by an electromagnetic field formed around a power reception unit. The vehicle includes: a connection portion to which an energy supply unit supplying energy is connected; and a power reception unit (20) including a coil (22). The coil (22) is formed to surround a winding axis (O1) extending in a horizontal direction. A first connection portion (77) is provided at a position away from the winding axis (O1).

FIG.14

**Description**

TECHNICAL FIELD

The present invention relates to a vehicle capable of contactlessly receiving electric power.

BACKGROUND ART

In recent years, due to concerns with environment, attention has been drawn to a hybrid vehicle, an electric vehicle, and the like, each of which drives driving wheels using electric power from a battery or the like.

Particularly drawing attention in recent years is wireless charging, by which such a battery included in an electrically powered vehicle can be charged contactlessly without using a plug or the like. Recently, various types of charging methods have been proposed with regard to the contactless charging methods. Particularly, a technique of contactlessly transferring electric power using a resonance phenomenon is receiving attention.

For example, a vehicle described in each of Japanese Patent Laying-Open No. 2010-172084 and Japanese Patent Laying-Open No. 2011-49230 includes a primary side core, and a primary side coil wound around the primary side core.

Also, a vehicle described in Japanese Patent Laying-Open No. 2011-193671 includes a power reception unit that receives electric power from a power transmission unit provided externally.

CITATION LIST

PATENT DOCUMENT

PTD 1: Japanese Patent Laying-Open No. 2010-172084
PTD 2: Japanese Patent Laying-Open No. 2011-49230
PTD 3: Japanese Patent Laying-Open No. 2011-193671

SUMMARY OF INVENTION

TECHNICAL PROBLEM

Some vehicles include: a first connection portion to which a charging plug is connected; and a second connection portion to which a plug is connected, through which gasoline or a hydrogen fuel is supplied. However, in the inventions disclosed in the patent documents described above, no consideration is taken for the position in which a power reception unit or the like is mounted and the positions in which the first and second connection portions are mounted.

Consequently, if a refueling operation is performed while electric power is contactlessly transferred between a power transmission unit and a power reception unit, an electronic device carried by an operator may be affected.

The present invention has been made in view of the foregoing problem, and has an object to provide a vehicle allowing an electronic device carried by an operator to be less affected by an electromagnetic field formed around the power reception unit.

SOLUTION TO PROBLEM

A vehicle according to the present invention includes: a connection portion to which a supply unit that supplies energy is connected; and a power reception unit that includes a coil and receives electric power contactlessly from a power transmission unit provided externally. The coil is formed to surround a winding axis extending in a horizontal direction. The connection portion is provided at a position away from the winding axis. Preferably, the connection portion and the winding axis do not overlap with each other.

Preferably, the vehicle has a circumferential surface and an upper surface. The circumferential surface includes a plurality of surfaces. The circumferential surface includes a first surface, a second surface facing the first surface, a third surface disposed between the first surface and the second surface, and a fourth surface disposed between the first surface and the second surface and facing the third surface. The coil is disposed such that the winding axis passes through the third surface and the fourth surface. The connection portion is provided in one of the first surface, the second surface and the upper surface.

Preferably, the vehicle has a circumferential surface including a plurality of surfaces, and an upper surface.

The circumferential surface includes a front surface, a rear surface, a first side surface, and a second side surface. The coil is disposed such that the winding axis passes through the front surface and the rear surface. The connection portion is provided in the first side surface or the second side surface.

Preferably, the connection portion is provided at a position away from the winding axis and at a position away from the coil.

Preferably, the vehicle has a circumferential surface including a plurality of surfaces. The circumferential surface includes a first surface, a second surface facing the first surface, a third surface disposed between the first surface and the second surface, and a fourth surface disposed between the first surface and the second surface and facing the third surface. The connection portion is provided in one of the first surface, the second surface, the third surface, and the fourth surface that is farthest away from a center of the coil.

Preferably, the vehicle has a circumferential surface and an upper surface. The circumferential surface includes a plurality of surfaces. The circumferential surface includes a front surface, a rear surface, a first side surface, and a second side surface. The coil has a center located at a position close to the rear surface relative to the front surface. The connection portion is provided in the first side surface or the second side surface, and provided at a position close to the front surface relative to the rear surface. Preferably, the vehicle includes a passenger compartment capable of housing a passenger, a boarding opening communicating with the passenger compartment, and a door that opens/closes the boarding opening. The connection portion is provided at a front side relative to the door.

Preferably, the vehicle further includes a battery. The battery is provided to overlap with the winding axis. Preferably, the battery is longer in a direction in which the winding axis extends than in a direction perpendicular to the winding axis. Preferably, the battery includes a plurality of battery cells. The battery cells are arranged in a direction in which the winding axis extends.

Preferably, the vehicle has a circumferential surface and an upper surface. The circumferential surface includes a plurality of surfaces. The circumferential surface includes a first surface, a second surface facing the first surface, a third surface disposed between the first surface and the second surface, and a fourth surface disposed between the first surface and the second surface and facing the third surface. The coil is disposed such that the winding axis passes through the third surface and the fourth surface. The connection portion is provided in the upper surface and disposed near the first surface or the second surface.

Preferably, the vehicle has a circumferential surface and an upper surface. The circumferential surface includes a plurality of surfaces. The circumferential surface includes a first surface, a second surface facing the first surface, a third surface disposed between the first surface and the second surface, and a fourth surface disposed between the first surface and the second surface and facing the third surface. The connection portion is provided in the upper surface. Assuming that one of the first surface, the second surface, the third surface, and the fourth surface that is farthest away from a center of the coil is defined as a farthest surface, the connection portion is provided at a position in the upper surface near the farthest surface.

Preferably, the connection portion includes a charging portion to which a power supply plug that supplies electric power is connected; and an energy supply unit to which a supply plug that supplies energy different from electric power is connected. The energy supply unit is provided at a position farther away from the coil than the charging portion.

Preferably, the connection portion includes a charging portion to which a power supply plug that supplies electric power is connected; and an energy supply unit to which a supply plug that supplies energy different from electric power is connected. The charging portion is provided at a position farther away from the coil than the energy supply unit.

Preferably, a difference between a natural frequency of the power transmission unit and a natural frequency of the power reception unit is 10% or less of the natural frequency of the power reception unit. Preferably, a coupling coefficient between the power reception unit and the power transmission unit is 0.1 or less.

Preferably, the power reception unit receives electric power from the power transmission unit through at least one of a magnetic field and an electric field, the magnetic field being formed between the power reception unit and the power transmission unit and oscillating at a specific frequency, the electric field being formed between the power reception unit and the power transmission unit and oscillating at the specific frequency. Preferably, the winding axis includes a first winding axis and a second winding axis that intersects the first winding axis. The coil includes a first coil formed to surround the first winding axis, and a second coil formed to surround the second winding axis. The connection portion is provided at a position away from the first winding axis and the second winding axis. A vehicle according to the present invention includes: a connection portion to which a supply unit that supplies energy is connected; and a power reception unit (20) that includes a coil and receives electric power contactlessly from a power transmission unit provided externally. An electromagnetic field is distributed to be wider in a second direction intersecting a first direction than in the first direction, the electromagnetic field being formed around the power reception unit when the power reception unit receives electric power contactlessly from the power transmission unit. The connection portion is provided at a position away from a region that extends from the coil in the second direction.

ADVANTAGEOUS EFFECTS OF INVENTION

According to the vehicle of the present invention, devices mounted in various plugs can be suppressed from being affected by the electromagnetic field formed around the power reception unit.

BRIEF DESCRIPTION OF DRAWINGS

Fig. 1 is a schematic view schematically showing a power reception device, a power transmission device, and a power transfer system according to the present embodiment.
Fig. 2 is a side view showing the left side surface of an electrically powered vehicle 10.
Fig. 3 is a side view showing the right side surface of electrically powered vehicle 10.
Fig. 4 is a front view of electrically powered vehicle 10.
Fig. 5 is a rear view of electrically powered vehicle 10.
Fig. 6 is a front view of electrically powered vehicle 10.
Fig. 7 is a bottom view of electrically powered vehicle 10.
Fig. 8 is a cross sectional view showing a power reception device 11.
Fig. 9 is an exploded perspective view of power reception device 11.
Fig. 10 is an exploded perspective view showing a fixation member 27 and a ferrite core 21.
Fig. 11 is a perspective view showing a second coil 22.
Fig. 12 is a plan view of second coil 22 when viewed in plan.
Fig. 13 is a perspective view showing a state in which a power reception unit 20 and a power transmission unit 56 are arranged to face each other.
Fig. 14 is a plan view schematically showing a layout of second coil 22, a refueling portion 77, and a charging portion 78 when electrically powered vehicle 10 is viewed from above in a direction vertical to electrically powered vehicle 10.
Fig. 15 shows a simulation model of the power transfer system.
Fig. 16 is a graph showing a relation between power transfer efficiency and deviation in natural frequency between power transmission unit 93 and power reception unit 96.
Fig. 17 is a graph showing a relation between the power transfer efficiency and frequency f3 of current supplied to a first coil 58 when an air gap AG is changed with natural frequency f0 being fixed.
Fig. 18 is a graph showing distribution of a magnetic field in a direction in which a winding axis O1 extends.
Fig. 19 is a graph showing distribution of a magnetic field in a direction perpendicular to winding axis O1.
Fig. 20 is a graph showing distribution of an electric field in the direction in which winding axis O1 extends.
Fig. 21 is a graph showing distribution of an electric field in the direction perpendicular to winding axis O1.
Fig. 22 is a left side view of an electrically powered vehicle 10 according to the second embodiment.
Fig. 23 is a right side view of electrically powered vehicle 10.
Fig. 24 is a plan view schematically showing electrically powered vehicle 10 when electrically powered vehicle 10 is viewed from above in a direction vertical to electrically powered vehicle 10.
Fig. 25 is a left side view of electrically powered vehicle 10 according to the third embodiment.
Fig. 26 is a plan view schematically showing electrically powered vehicle 10 when electrically powered vehicle 10 is viewed from above in a direction vertical to electrically powered vehicle 10.
Fig. 27 is a left side view of electrically powered vehicle 10 according to the fourth embodiment.
Fig. 28 is a right side view of electrically powered vehicle 10.
Fig. 29 is a plan view schematically showing electrically powered vehicle 10 when electrically powered vehicle 10 is viewed from above in a direction vertical to electrically powered vehicle 10.
Fig. 30 is a left side view of electrically powered vehicle 10 according to the fifth embodiment.
Fig. 31 is a right side view of electrically powered vehicle 10.
Fig. 32 is a plan view schematically showing electrically powered vehicle 10 when electrically powered vehicle 10 is viewed from above in a direction vertical to electrically powered vehicle 10.
Fig. 33 is a front view of an electrically powered vehicle 10 according to the sixth embodiment.
Fig. 34 is a plan view schematically showing electrically powered vehicle 10 when electrically powered vehicle 10 is viewed from above in a direction vertical to electrically powered vehicle 10.
Fig. 35 is a front view of an electrically powered vehicle 10 according to the seventh embodiment.
Fig. 36 is a left side view of electrically powered vehicle 10.
Fig. 37 is a plan view schematically showing electrically powered vehicle 10 when electrically powered vehicle 10 is viewed from above in a direction vertical to electrically powered vehicle 10.
Fig. 38 is a rear view of electrically powered vehicle 10 according to the eighth embodiment.

Fig. 39 is a plan view schematically showing electrically powered vehicle 10 when electrically powered vehicle 10 is viewed from above in a direction vertical to electrically powered vehicle 10.

Fig. 40 is a left side view of electrically powered vehicle 10 according to the ninth embodiment.

Fig. 41 is a rear view of electrically powered vehicle 10.

Fig. 42 is a plan view schematically showing electrically powered vehicle 10 when electrically powered vehicle 10 is viewed from above.

Fig. 43 is a left side view of electrically powered vehicle 10 according to the tenth embodiment.

Fig. 44 is a right side view of electrically powered vehicle 10.

Fig. 45 is a plan view schematically showing electrically powered vehicle 10 when electrically powered vehicle 10 is viewed from above in a direction vertical to electrically powered vehicle 10.

Fig. 46 is a perspective view showing power reception unit 20, a battery 15 and a floor panel 100.

Fig. 47 is a plan view showing a modification of electrically powered vehicle 10 according to the tenth embodiment.

Fig. 48 is a plan view of electrically powered vehicle 10 according to the eleventh embodiment.

Fig. 49 is a left side view of electrically powered vehicle 10.

Fig. 50 is a plan view schematically showing electrically powered vehicle 10 when electrically powered vehicle 10 is viewed in plan from above in a direction vertical to electrically powered vehicle 10.

Fig. 51 is a plan view of electrically powered vehicle 10 according to the twelfth embodiment.

Fig. 52 is a left side view of electrically powered vehicle 10.

Fig. 53 is a plan view schematically showing electrically powered vehicle 10 when electrically powered vehicle 10 is viewed in plan from above in a direction vertical to electrically powered vehicle 10.

Fig. 54 is a plan view of electrically powered vehicle 10 according to the thirteenth embodiment.

Fig. 55 is a left side view of electrically powered vehicle 10.

Fig. 56 is a plan view schematically showing electrically powered vehicle 10 when electrically powered vehicle 10 is viewed in plan from above in a direction vertical to electrically powered vehicle 10.

Fig. 57 is a left side view of electrically powered vehicle 10 according to the thirteenth embodiment.

Fig. 58 is a plan view schematically showing electrically powered vehicle 10 when electrically powered vehicle 10 is viewed from above in a direction vertical to electrically powered vehicle 10.

Fig. 59 is a right side view of electrically powered vehicle 10 according to the fourteenth embodiment.

Fig. 60 is a plan view schematically showing electrically powered vehicle 10 when electrically powered vehicle 10 is viewed in plan from above in a direction vertical to electrically powered vehicle 10.

Fig. 61 is a left side view of electrically powered vehicle 10 according to the fifteenth embodiment.

Fig. 62 is a right side view of electrically powered vehicle 10.

Fig. 63 is a plan view schematically showing electrically powered vehicle 10 when electrically powered vehicle 10 is viewed in plan from above in a direction vertical to electrically powered vehicle 10.

Fig. 64 is a plan view schematically showing an electrically powered vehicle 10 according to the sixteenth embodiment.

Fig. 65 is a plan view showing a power reception unit 20.

Fig. 66 is a cross sectional view taken along a LXVI-LXVI line shown in Fig. 29.

Fig. 67 is a perspective view showing power reception unit 20 and power transmission unit 56.

Fig. 68 is a plan view schematically showing an electrically powered vehicle 10 according to the twenty-sixth embodiment.

Fig. 69 is a plan view schematically showing power reception unit 20.

Fig. 70 is a perspective view schematically showing power reception unit 20 and power transmission unit 56.

Fig. 71 is a perspective view schematically showing power reception unit 20 and power transmission unit 56.

Fig. 72 is a plan view showing a modification of power reception unit 20.

Fig. 73 is a perspective view showing that electric power is being transferred between power reception unit 20 shown in Fig. 71 and power transmission unit 56 of the same type as power reception unit 20.

Fig. 74 is a perspective view showing that electric power is being transferred between power reception unit 20 shown in Fig. 72 and power transmission unit 56 of a type different from power reception unit 20.

Fig. 75 is a plan view schematically showing an electrically powered vehicle 10 according to the twenty-seventh embodiment.

Fig. 76 is a perspective view schematically showing power reception unit 20.

Fig. 77 is a perspective view showing that electric power is being transferred between power reception unit 20 shown in Fig. 76 and power reception unit 20 of the same type as this power reception unit 20.

Fig. 78 is a perspective view showing that electric power is being transferred between power reception unit 20 and power transmission unit 56.

Fig. 79 is a plan view schematically showing electrically powered vehicle 10.

DESCRIPTION OF EMBODIMENTS

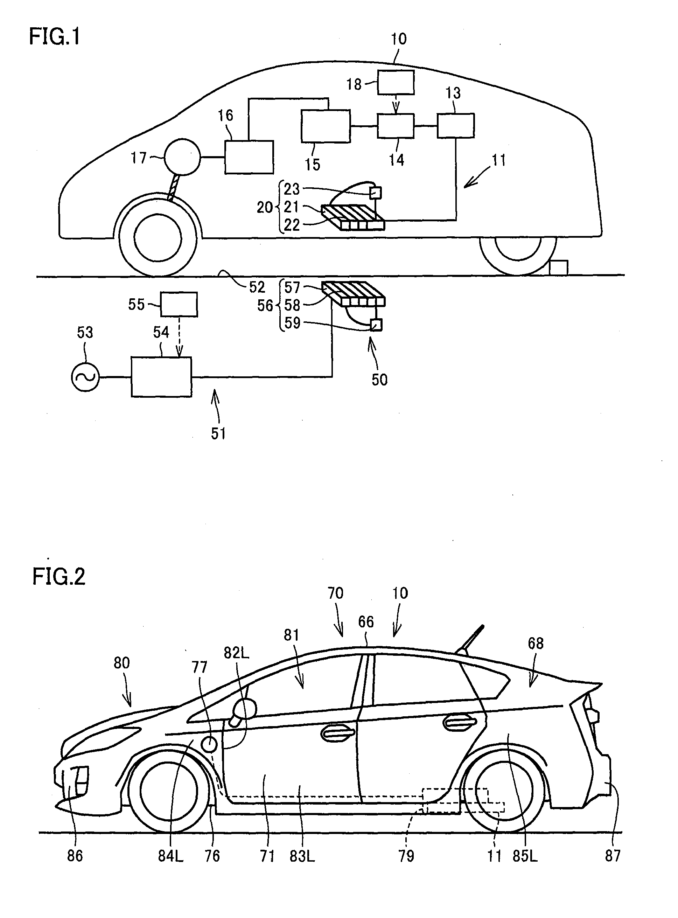

Referring to Figs. 1 to 63, a power reception device and a power transmission device according to embodiments of the present invention, and a power transfer system including the power transmission device and the power reception device will be hereinafter described.

(First Embodiment)

Fig. 1 is a schematic view schematically showing a power reception device, a power transmission device and a power transfer system according to the present embodiment.

The power transfer system according to the first embodiment includes: an electrically powered vehicle 10 including a power reception device 11; and an external power feeding device 51 including a power transmission device 50. Power reception device 11 of electrically powered vehicle 10 receives electric power mainly from power transmission device 50 when parked in a predetermined position of a parking space 52 provided with power transmission device 50.

Parking space 52 is provided with a sprag as well as lines indicating a parking position and a parking range such that electrically powered vehicle 10 is parked at the predetermined position.

External power feeding device 51 includes: a high-frequency power driver 54 connected to an alternating-current (AC) power supply 53; a control unit 55 that controls driving of high-frequency power driver 54 or the like; and power transmission device 50 connected to this high-frequency power driver 54. Power transmission device 50 includes a power transmission unit 56. Power transmission unit 56 includes: a ferrite core 57; a first coil (resonance coil) 58 wound around ferrite core 57; and a capacitor 59 connected to this first coil 58. It is to be noted that capacitor 59 is not an essential configuration. First coil 58 is connected to high-frequency power driver 54.

Power transmission unit 56 includes an electric circuit formed by inductance of first coil 58, stray capacitance of first coil 58, and capacitance of capacitor 59.

In Fig. 1, electrically powered vehicle 10 includes: power reception device 11; a rectifier 13 connected to power reception device 11; a DC/DC converter 14 connected to rectifier 13; a battery 15 connected to DC/DC converter 14; a power control unit (PCU) 16; a motor unit 17 connected to power control unit 16; and a vehicle ECU (Electronic Control Unit) 18 that controls driving of DC/DC converter 14, power control unit 16, or the like. It is to be noted that electrically powered vehicle 10 according to the present embodiment is a hybrid vehicle including an engine not shown in the figures, but includes a fuel cell vehicle as long as it is a vehicle driven by a motor.

Rectifier 13, which is connected to power reception device 11, converts alternating current supplied from power reception device 11 into direct current, and supplies it to DC/DC converter 14.

DC/DC converter 14 adjusts the voltage of the direct current supplied from rectifier 13, and supplies it to battery 15. It is to be noted that DC/DC converter 14 is not an essential configuration and may be omitted. In such a case, DC/DC converter 14 can be replaced with a matching device provided between power transmission device 50 and high-frequency power driver 54 to match the impedance with external power feeding device 51.

Power control unit 16 includes a converter connected to battery 15 and an inverter connected to this converter, and the converter adjusts (boosts) the direct current supplied from battery 15 and supplies it to the inverter. The inverter converts the direct current supplied from the converter into alternating current, and supplies it to motor unit 17.

For motor unit 17, a three-phase alternating current motor or the like is employed, for example. Motor unit 17 is driven using the alternating current supplied from the inverter of power control unit 16.

It is to be noted that electrically powered vehicle 10 further includes an engine or a fuel cell. Motor unit 17 includes: a motor generator that mainly functions as a power generator; and a motor generator that mainly functions as a motor.

Power reception device 11 includes a power reception unit 20. Power reception unit 20 includes: a ferrite core 21; a second coil 22 wound around the outer circumferential surface of ferrite core 21; and a capacitor 23 connected to second coil 22. Also in power reception unit 20, capacitor 23 is not an essential configuration. Second coil 22 is connected to rectifier 13. Second coil 22 has stray capacitance. Accordingly, power reception unit 20 has an electric circuit formed by inductance of second coil 22 and capacitances of second coil 22 and capacitor 23. It is to be noted that capacitor 23 is not an essential configuration and can be omitted.

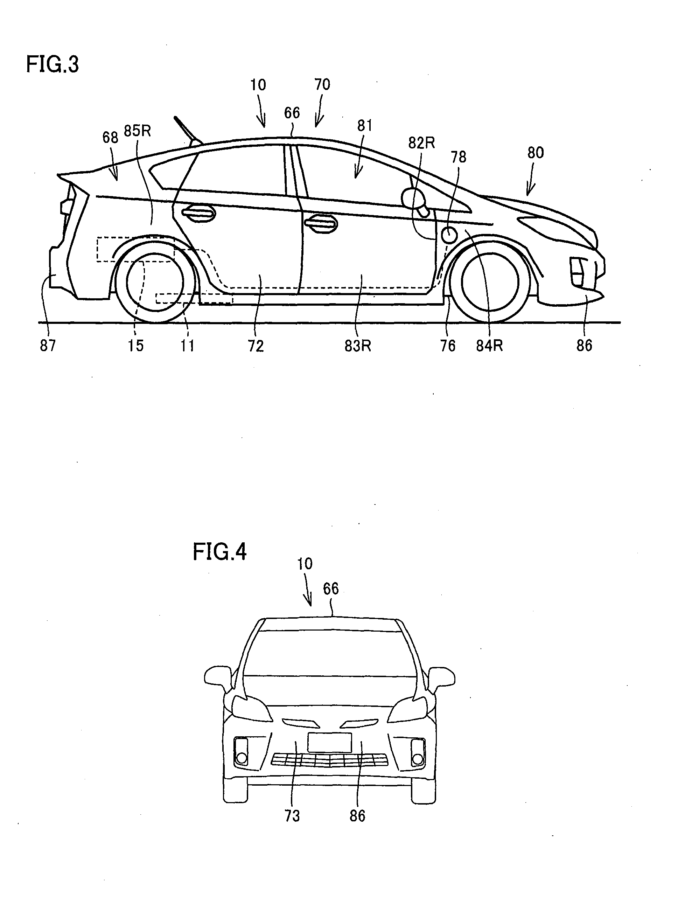

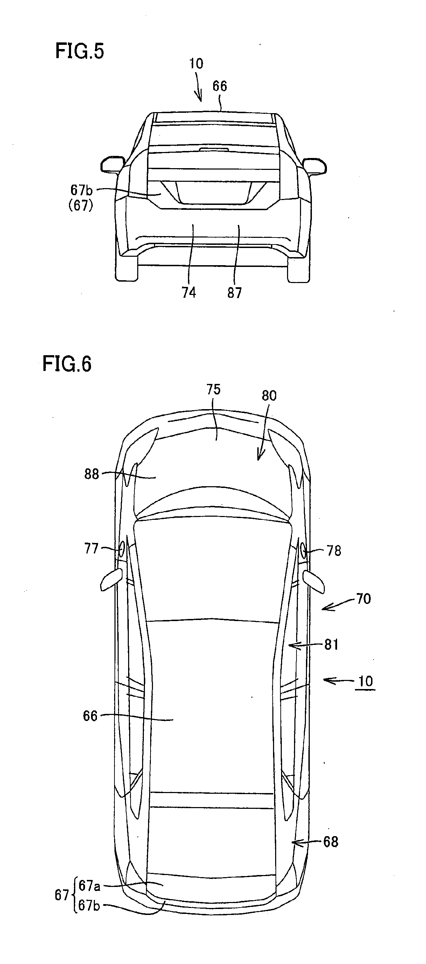

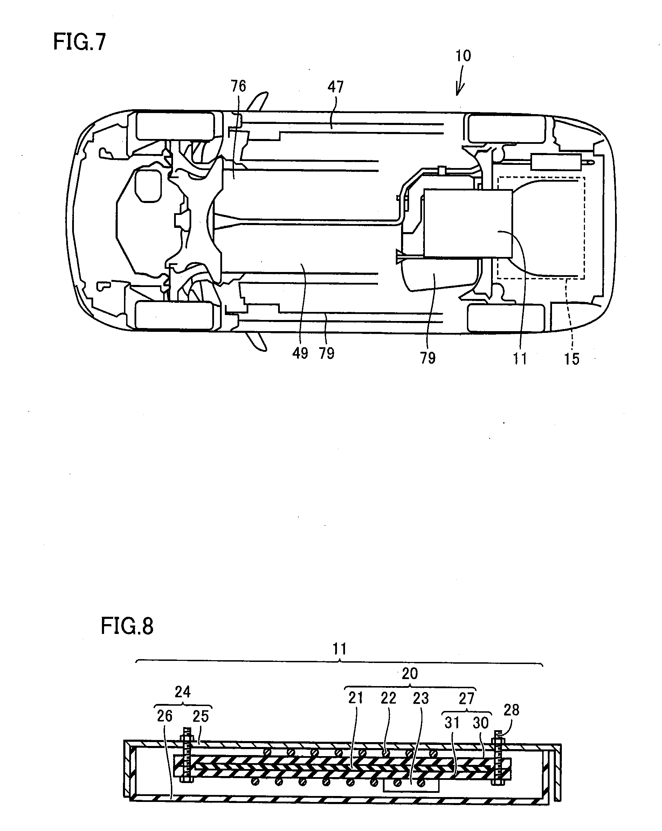

Fig. 2 is a side view showing the left side surface of electrically powered vehicle 10. Fig. 3 is a side view showing the right side surface of electrically powered vehicle 10. Fig. 4 is a front view of electrically powered vehicle 10. Fig. 5 is a rear view of electrically powered vehicle 10. Fig. 6 is a plan view of electrically powered vehicle 10. Fig. 7 is a bottom view of electrically powered vehicle 10.

In Fig. 2, electrically powered vehicle 10 includes a vehicle main body 70 and wheels provided in vehicle main body 70. Formed in vehicle main body 70 are: a driving compartment 80 having motor unit 17, the engine, and the like contained therein; a passenger compartment 81 disposed at a rear side relative to driving compartment 80 in the traveling direction of electrically powered vehicle 10; and a luggage compartment 68 disposed at a rear side relative to passenger compartment 81 in the traveling direction.

In left side surface 71 of electrically powered vehicle 10, a boarding opening 82L is formed to communicate with passenger compartment 81. Vehicle main body 70 includes: a door 83L that opens/closes boarding opening 82L; a front fender 84L disposed at a front side relative to boarding opening 82L in the traveling direction; and a front bumper 86 disposed at a front side relative to front fender 84 in the traveling direction.

Vehicle main body 70 includes: a rear fender 85L disposed at a rear side relative to boarding opening 82L in the traveling direction; and a rear bumper 87 disposed at a rear side relative to rear fender 85L in the travelling direction.

In Fig. 3, in right side surface 72 of electrically powered vehicle 10, a boarding opening 82R is formed to communicate with passenger compartment 81. Vehicle main body 70 includes: a door 83R that opens/closes boarding opening 82R; a front fender 84R disposed at a front side relative to boarding opening 82R in the traveling direction; and a rear fender 85R disposed at a rear side relative to boarding opening 82R in the traveling direction. In Fig. 6, vehicle main body 70 includes: an engine roof 88 that opens/closes driving compartment 80; a roof 66 that defines the upper surface of passenger compartment 81; and a hatch 67 that opens/closes an opening formed in luggage compartment 68. Hatch 67 includes an upper surface portion 67a and a rear surface portion 67b.

Left side surface 71 of electrically powered vehicle 10 is a surface that is in the width direction of electrically powered vehicle 10 and that can be seen when electrically powered vehicle 10 is viewed from a position away from electrically powered vehicle 10 leftward as shown in Fig. 2.

Hence, left side surface 71 of electrically powered vehicle 10 is mainly defined by the side portion of front bumper 86, front fender 84L, door 83L, rear fender 85L, and the side portion of rear bumper 87.

In Fig. 3, right side surface 72 of electrically powered vehicle 10 is a surface that is in the width direction of electrically powered vehicle 10 and that can be seen when electrically powered vehicle 10 is viewed from a position away from electrically powered vehicle 10 rightward as shown in Fig. 3. Hence, right side surface 72 of electrically powered vehicle 10 is mainly defined by the side portion of front bumper 86, front fender 84R, door 83R, rear fender 85R, and the side portion of rear bumper 87.

In Fig. 4, front surface 73 of electrically powered vehicle 10 is a surface that can be seen when electrically powered vehicle 10 is viewed from a position away from electrically powered vehicle 10 forwardly in the traveling direction.

Accordingly, front surface 73 of electrically powered vehicle 10 is mainly defined by the front surface portion of front bumper 86 and members provided between engine roof 88 and front bumper 86.

In Fig. 5, rear surface 74 of electrically powered vehicle 10 is a surface that can be seen when electrically powered vehicle 10 is viewed from a position away from electrically powered vehicle 10 backwardly in the traveling direction.

Accordingly, rear surface 74 of electrically powered vehicle 10 is mainly defined by the rear surface portion of rear bumper 87 and rear surface portion 67b of hatch 67.

In Fig. 6, upper surface 75 of electrically powered vehicle 10 is a surface that can be seen when electrically powered vehicle 10 is viewed from a position away upwardly in a direction vertical to the ground in a state such that the wheels (tires) of electrically powered vehicle 10 are in contact with the ground.

Accordingly, upper surface 75 of electrically powered vehicle 10 is mainly defined by engine roof 88, roof 66, and upper surface portion 67a of hatch 67.

In Fig. 7, bottom surface 76 of electrically powered vehicle 10 is a surface that can be seen when electrically powered vehicle 10 is viewed from a position away downwardly in the direction vertical to the ground in a state such that the wheels (tires) of electrically powered vehicle 10 are in contact with the ground.

Here, as shown in Fig. 2 and Fig. 3, electrically powered vehicle 10 includes: a refueling portion (second connection portion) 77 provided in left side surface 71; a charging portion (first connection portion) 78 provided in right side surface 72; and a fuel tank 79 connected to refueling portion 77 via a pipe or the like.

In the present embodiment, refueling portion 77 is provided at front fender 84L and charging portion 78 is provided at front fender 84R. Charging portion 78 is connected to battery 15. Between charging portion 78 and battery 15, an interconnection and a transducer, which converts alternating current supplied from charging portion 78 into direct current, are provided.

Refueling portion 77 is connected to a refueling plug provided in a refueling device. The refueling plug (fuel supply unit) supplies fuel such as gasoline or liquid hydrogen to refueling portion 77, and the fuel supplied to refueling portion 77 is supplied to fuel tank 79. Thus, energy supplied from refueling portion 77 is energy different from electric power and is fuel such as gasoline or a hydrogen compound including hydrogen element.

A charging plug provided in a charging device is connected to charging portion 78. The charging plug (power supply unit) supplies electric power to charging portion 78. Alternating current, which is supplied to charging portion 78, is converted into direct current and is accumulated in battery 15.

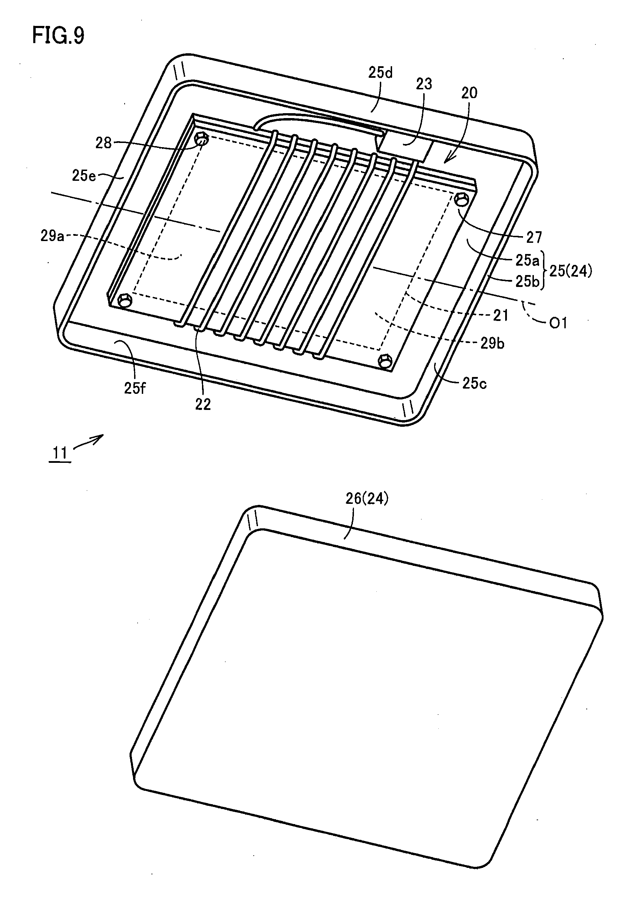

Fig. 8 is a cross sectional view showing power reception device 11 and Fig. 9 is an exploded perspective view of power reception device 11. As shown in Fig. 8 and Fig. 9, power reception device 11 includes power reception unit 20 and a case 24 having power reception unit 20 accommodated therein.

Case 24 includes: a shield 25 formed to open downwardly; and a cover portion 26 provided to close the opening of shield 25.

Shield 25 includes: a top plate portion 25a; and a circumferential wall portion 25b formed to extend downwardly from the circumferential edge portion of top plate portion 25a. Circumferential wall portion 25b includes a plurality of wall portions 25c to 25f, and the plurality of wall portions 25c to 25f are connected to one another to form annular circumferential wall portion 25b. Wall portion 25c and wall portion 25e are arranged in a direction in which winding axis O1 of second coil 22 extends, whereas wall portion 25d and wall portion 25f are arranged in a direction perpendicular to winding axis O1 of second coil 22. It is to be noted that the shape of shield 25 is not limited to such a shape and various types of shapes can be employed such as a polygonal shape, a circular shape, and an oval shape.

The bottom end portion of circumferential wall portion 25b forms an opening, which is closed by cover portion 26.

Power reception unit 20 includes: a ferrite core 21 formed to have a plate-like shape; a fixation member 27 that sandwiches ferrite core 21 from the upper and lower sides; a second coil 22 wound around fixation member 27; and a capacitor 23 connected to second coil 22.

Ferrite core 21 includes a protrusion portion 29a and a protrusion portion 29b, each of which protrudes from the inside of second coil 22 in the direction in which winding axis O1 extends. Protrusion portion 29a protrudes from one end side of second coil 22, whereas protrusion portion 29b protrudes from the other end side of second coil 22. Thus, ferrite core 21 is formed to be longer than the length of second coil 22 in the direction in which winding axis O1 extends.

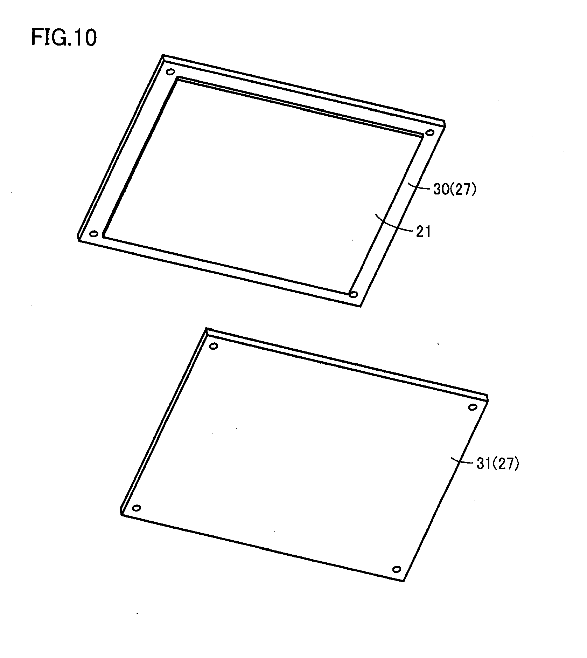

Fig. 10 is an exploded perspective view showing fixation member 27 and ferrite core 21. As shown in Fig. 10, fixation member 27 includes: an insulation piece 30 disposed at the upper surface side of ferrite core 21; and an insulation piece 31 disposed at the lower surface side of ferrite core 21.

Insulation piece 30 and insulation piece 31 are fixed to each other through a bolt 28 shown in Fig. 9 or the like, and ferrite core 21 is sandwiched between insulation piece 30 and insulation piece 31. Because ferrite core 21 is sandwiched between insulation piece 30 and insulation piece 31, ferrite core 21 is protected.

Power reception device 11 thus formed is provided in bottom surface 76 of electrically powered vehicle 10 as shown in Fig. 7. Various types of methods can be employed to fix power reception device 11. For example, electrically powered vehicle 10 may include: side members 47 arranged in the width direction of the vehicle; and a plurality of cross members provided to connect side members 47 to each other, power reception device 11 being suspended from side members 47 and the cross members. Alternatively, electrically powered vehicle 10 includes a floor panel 49, to which power reception device 11 may be fixed. Regarding the expression "power reception device 11 is disposed in bottom surface 76", power reception device 11 does not need to be necessarily provided at a position that can be visually seen when electrically powered vehicle 10 is viewed from below electrically powered vehicle 10. Hence, for example, power reception device 11 is disposed at the lower side relative to floor panel 49.

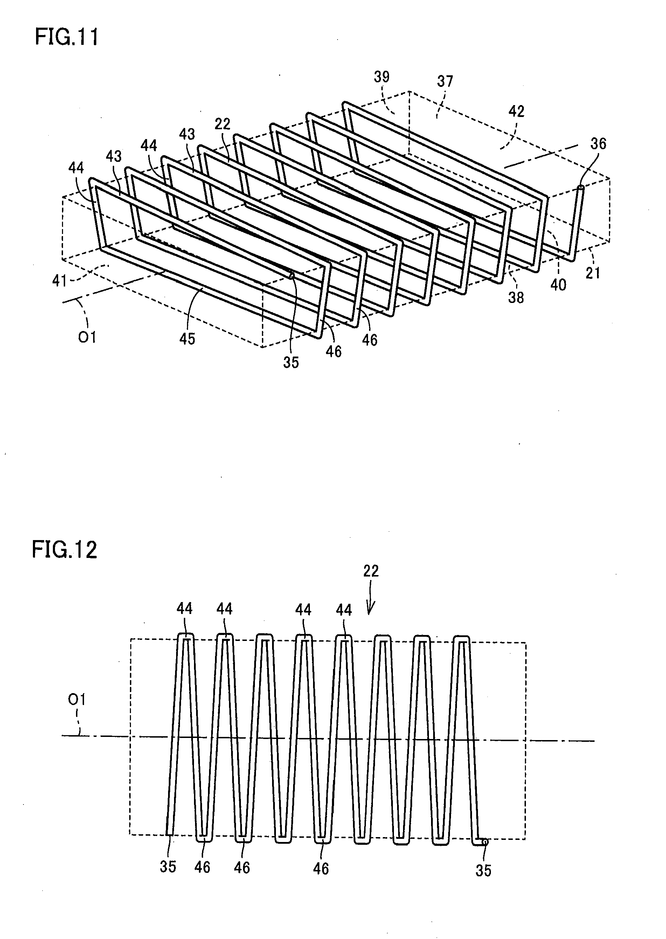

Fig. 11 is a perspective view showing second coil 22. As shown in Fig. 11, second coil 22 includes a first end portion 35 and a second end portion 36. As second coil 22 extends from first end portion 35 to second end portion 36, second coil 22 is formed to surround winding axis O1 and be displaced in the direction in which winding axis O1 extends. Second coil 22 is formed by winding a coil wire for a plurality of times. It is to be noted that first end portion 35 and second end portion 36 are disposed at both ends of second coil 22 in the direction in which winding axis O1 extends.

In the example shown in Fig. 11, ferrite core 21 is formed to have a substantially rectangular solid shape, and ferrite core 21 includes: an upper surface 37; a bottom surface 38 opposite to upper surface 37 in the thickness direction; side surfaces 39 and 40 arranged in the short direction; and end surfaces 41 and 42 arranged in the longitudinal direction. It is to be noted that ferrite core 21 may be constructed of a plurality of divided ferrite pieces.

Second coil 22 includes: long side portions 43 disposed on upper surface 37; short side portions 44 extending downwardly from the end portions of long side portions 43 and disposed on side surface 39; long side portions 45 connected to short side portions 44 and disposed on bottom surface 38; and short side portions 46 connected to the end portions of long side portions 45 and disposed on side surface 40.

One turn of the coil wire around the circumferential surfaces of ferrite core 21 is provided by one long side portion 43, one short side portion 44, one long side portion 45, and one short side portion 46.

Second coil 22, which is wound for a plurality of times, includes the plurality of long side portions 43, the plurality of short side portions 44, the plurality of long side portions 45, and the plurality of short side portions 46.

Fig. 12 is a plan view of second coil 22 when viewed in plan. As shown in Fig. 12, the plurality of short side portions 46 are arranged in the direction in which winding axis O1 extends, and the plurality of short side portions 44 are arranged in a similar manner in the direction in which winding axis O1 extends.

Short side portions 44 and short side portions 46 are disposed on the same imaginary plane, face each other with winding axis O1 being interposed therebetween, and are arranged in the horizontal direction.

In the present embodiment, second coil 22 is formed to have a quadrangular shape when viewed from the front surface, but various types of shapes can be employed for the shape of the coil, such as an elliptical shape, an oval shape, and a polygon shape.

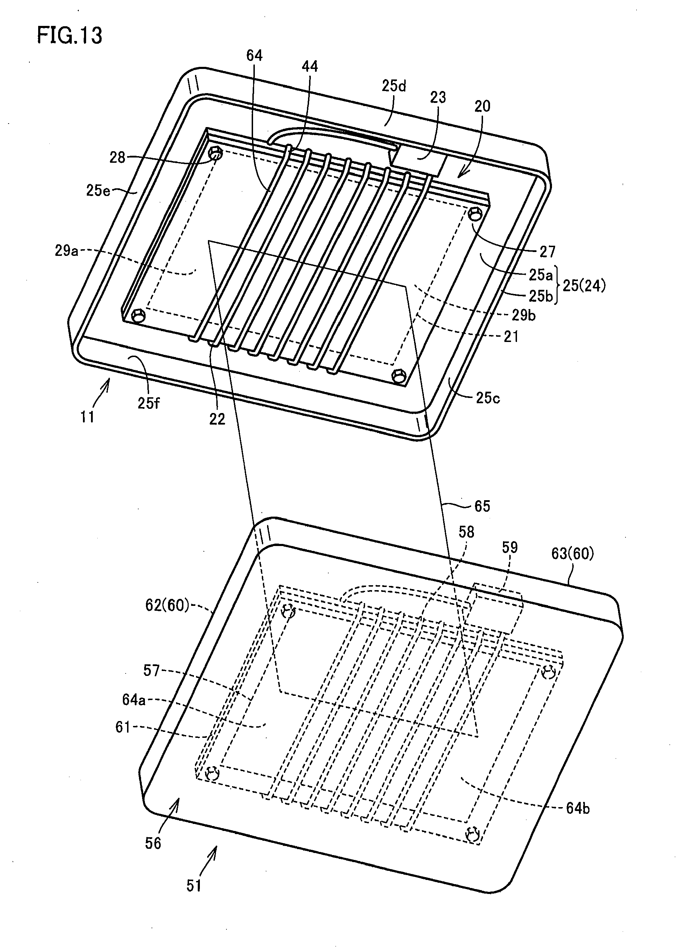

Fig. 13 is a perspective view showing a state in which power reception unit 20 and power transmission unit 56 are disposed to face each other. It is to be noted that in Fig. 13, cover portion 26 provided in power reception device 11 is not shown in the figure.

As shown in Fig. 13, during transfer of electric power, power reception unit 20 and power transmission unit 56 are disposed to face each other with an air gap therebetween.

Power transmission unit 56 includes: a case 60 having first coil 58 and the like contained therein; a fixation member 61 contained in case 60; ferrite core 57 contained in fixation member 61; first coil 58 attached onto the outer circumferential surface of fixation member 61; and capacitor 59 contained in case 60.

Case 60 includes: a shield 62 made of a metal material such as copper; and a cover member 63 made of a resin and provided on shield 62.

Shield 62 includes a bottom surface portion, and a circumferential wall portion formed to have an annular shape rising upwardly from the outer circumferential edge of the bottom surface portion, and the circumferential wall portion has an upper end portion extending in an annular manner to provide an opening that opens upwardly. Cover member 63 is formed to close the opening formed by the upper end portion of the circumferential wall portion of shield 62.

Ferrite core 57 includes a protrusion portion 64a and a protrusion portion 64b, each of which protrudes in the direction in which the winding axis of first coil 58 extends. Protrusion portion 64a is formed to protrude from one end side of first coil 58, whereas protrusion portion 64b protrudes from the other end side of first coil 58.

Fixation member 61 includes: an insulation piece disposed at the upper surface side of ferrite core 57; and an insulation piece disposed at the lower surface side of ferrite core 57. Ferrite core 57 is sandwiched between these two insulation pieces. The two insulation pieces are fixed to each other by a fastening member such as a bolt and a nut, thereby sandwiching ferrite core 57 between the two insulation pieces. First coil 58 is wound around the outer circumferential surface of fixation member 61.

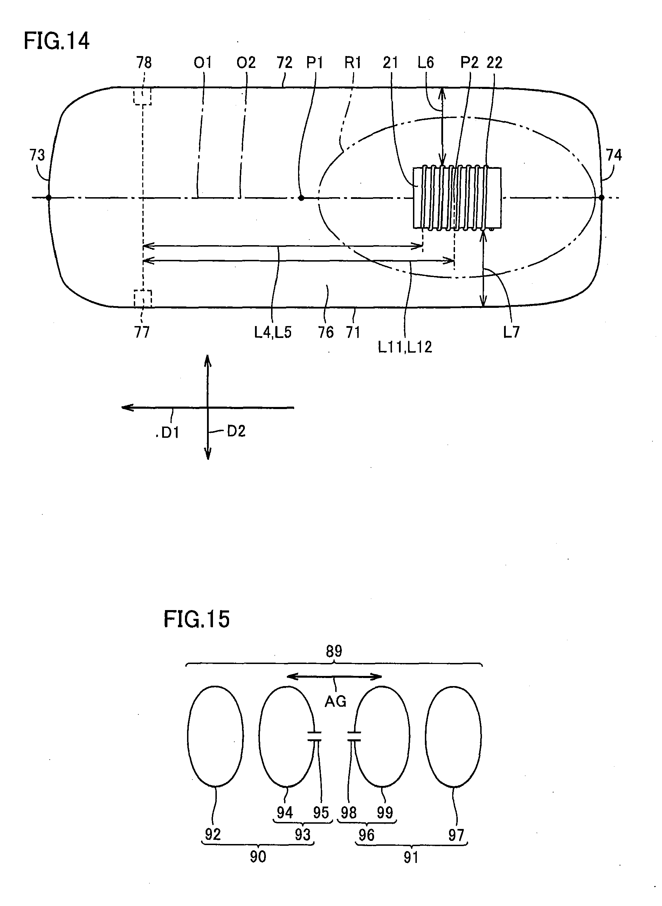

Fig. 14 is a plan view schematically showing a layout of second coil 22, refueling portion 77, and charging portion 78 when electrically powered vehicle 10 is viewed from above in the direction vertical to electrically powered vehicle 10.

As shown in this Fig. 14, electrically powered vehicle 10 includes left side surface 71 (the second side surface); right side surface (the first side surface) 72 facing left side surface 71 in the width direction of electrically powered vehicle 10; front surface (the third side surface) 73 disposed between left side surface 71 and right side surface 72; and rear surface (the fourth side surface) 74 disposed between left side surface 71 and right side surface 72, and facing front surface 73 in the front-rear direction of the vehicle.

Second coil 22 is disposed such that winding axis O1 is directed in the horizontal direction, and winding axis O1 extends to pass from front surface 73 through rear surface 74. The expression "winding axis O1 is directed in the horizontal direction" includes both a case where winding axis O1 extends completely in the horizontal direction and a case where winding axis O1 is directed substantially in the horizontal direction. The expression "winding axis O1 is directed substantially in the horizontal direction" is intended to mean that a crossing angle between the imaginary horizontal plane and winding axis O1 is 10° or less, for example. In this case, refueling portion 77 and charging portion 78 are provided at a distance from winding axis O1.

Specifically, winding axis O1 passes through the center portion of bottom surface 76 in the width direction of electrically powered vehicle 10, and extends in traveling direction D1 of electrically powered vehicle 10. On the other hand, refueling portion 77 is provided in left side surface 71 while charging portion 78 is provided in right side surface 72. Refueling portion 77 and charging portion 78 are arranged in a width direction D2.

Bottom surface 76 has a center portion P1 located in the center of bottom surface 76 in traveling direction D1, and also in the center portion of bottom surface 76 in width direction D2.

Second coil 22 is located at the rear side relative to center portion P1 in traveling direction D1. Refueling portion 77 and charging portion 78 are located at the front side relative to center portion P1 in traveling direction D1. In this case, coil center P2 is located at the center portion in winding axis O1 of second coil 22, and also at the center portion in the direction perpendicular to winding axis O1.

The distance between second coil 22 and refueling portion 77 in traveling direction (the direction from rear surface 74 to front surface 73) D1 is defined as a distance L4. The distance between second coil 22 and charging portion 78 in traveling direction D1 is defined as a distance L5. The shortest distance between second coil 22 and right side surface 72 is defined as a distance L6, while the shortest distance between second coil 22 and left side surface 71 is defined as a distance L7.

Assuming that the shorter one of distance L4 and distance L5 is defined as the second distance, and the shorter one of distance L6 and distance L7 is defined as the first distance, the second distance is longer than the first distance. In the example shown in this Fig. 14, distance L4 and distance L5 are equal in length while distance L6 and distance L7 are equal in length. Also, distance L4 and distance L5 are longer than each of distance L6 and distance L7.

Furthermore, among left side surface 71, right side surface 72, front surface 73, and rear surface 74, the surface that is farthest away from second coil 22 or coil center P2 is front surface 73.

In Fig. 1, in the power transfer system according to the present embodiment, a difference between the natural frequency of power transmission unit 56 and the natural frequency of power reception unit 20 is 10% or less of the natural frequency of power reception unit 20 or power transmission unit 56. By setting the natural frequency of each of power transmission unit 56 and power reception unit 20 to fall within such a range, power transfer efficiency can be improved. Meanwhile, if the difference in natural frequency becomes larger than 10% of the natural frequency of power reception unit 20 or power transmission unit 56, the power transfer efficiency becomes less than 10%, which results in problems such as a long charging time for battery 15.

Here, when no capacitor 59 is provided, the expression "natural frequency of power transmission unit 56" is intended to mean an oscillation frequency at which the electric circuit formed by the inductance of first coil 58 and the capacitance of first coil 58 freely oscillates. When capacitor 59 is provided, the expression "natural frequency of power transmission unit 56" is intended to mean an oscillation frequency at which the electric circuit formed by the capacitances of first coil 58 and capacitor 59 and the inductance of first coil 58 freely oscillates. In the above-described electric circuit, the natural frequency when the damping force and the electric resistance are set at zero or substantially zero is also called "resonance frequency of power transmission unit 56".

Likewise, when no capacitor 23 is provided, the expression "natural frequency of power reception unit 20" is intended to mean an oscillation frequency at which the electric circuit formed by the inductance of second coil 22 and the capacitance of second coil 22 freely oscillates. When capacitor 23 is provided, the expression "natural frequency of power reception unit 20" is intended to mean an oscillation frequency at which the electric circuit formed by the capacitances of second coil 22 and capacitor 23 and the inductance of second coil 22 freely oscillates. In the above-described electric circuit, the natural frequency when the damping force and the electric resistance are set at zero or substantially zero is also called "resonance frequency of power reception unit 20".

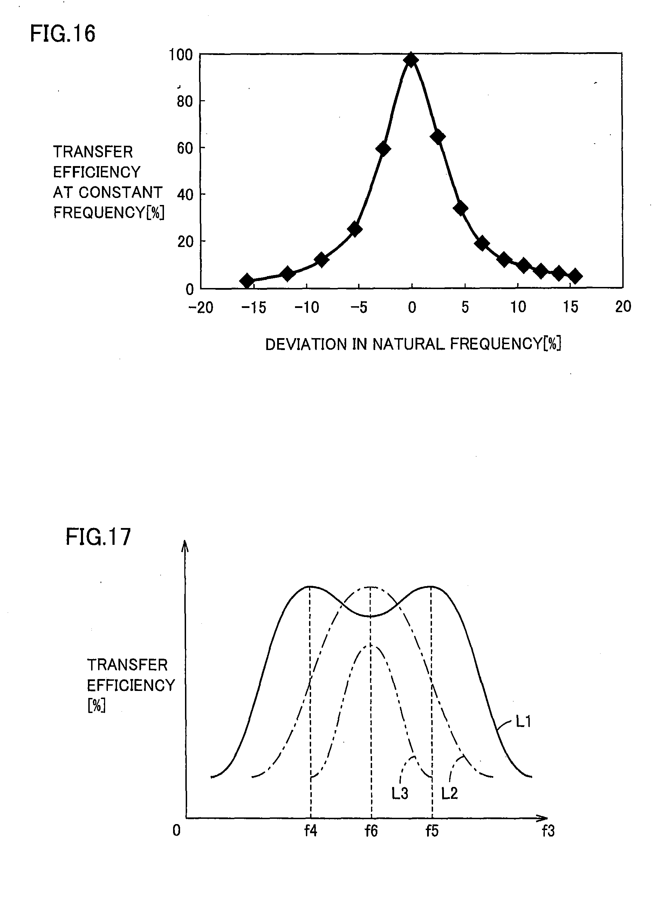

With reference to Fig. 15 and Fig. 16, the following describes a result of simulation in which a relation is analyzed between the difference in natural frequency and the power transfer efficiency. Fig. 15 shows a simulation model of the power transfer system. The power transfer system includes a power transmission device 90 and a power reception device 91. Power transmission device 90 includes a coil 92 (electromagnetic induction coil) and a power transmission unit 93. Power transmission unit 93 includes a coil 94 (resonance coil) and a capacitor 95 provided in coil 94.

Power reception device 91 includes a power reception unit 96 and a coil 97 (electromagnetic induction coil). Power reception unit 96 includes a coil 99 and a capacitor 98 connected to coil 99 (resonance coil).

Assume that the inductance of coil 94 is inductance Lt and the capacitance of capacitor 95 is capacitance C1. Assume that the inductance of coil 99 is inductance Lr and the capacitance of capacitor 98 is capacitance C2. By setting each of the parameters in this way, natural frequency f1 of power transmission unit 93 is indicated by the following formula (1) and natural frequency f2 of power reception unit 96 is indicated by the following formula (2):

$$f1 = 1/\{2\pi\,(Lt \times C1)^{1/2}\} \; ... \; (1)$$

$$f2 = 1/\{2\pi\,(Lr \times C2)^{1/2}\} \; ... \; (2)$$

Here, Fig. 16 shows a relation between the power transfer efficiency and the deviation in natural frequency between power transmission unit 93 and power reception unit 96 when only inductance Lt is changed with inductance Lr and capacitances C1, C2 being fixed. In this simulation, a relative positional relation between coil 94 and coil 99 is fixed, and the frequency of current supplied to power transmission unit 93 is constant.

In the graph shown in Fig. 16, the horizontal axis represents the deviation (%) in natural frequency whereas the vertical axis represents the transfer efficiency (%) at the constant frequency. The deviation (%) in natural frequency is indicated by the following formula (3):

$$(Deviation\ in\ natural\ frequency) = \{(f1 - f2)/f2\} \times 100\ (\%) \; ... \; (3)$$

As apparent also from Fig. 16, when the deviation (%) in natural frequency is ± 0%, the power transfer efficiency is close to 100%. When the deviation (%) in natural frequency is ±5%, the power transfer efficiency is 40%. When the deviation (%) in natural frequency is ±10%, the power transfer efficiency is 10%. When the deviation (%) in natural frequency is ±15%, the power transfer efficiency is 5%. Thus, it is understood that the power transfer efficiency can be improved by setting the natural frequency of each of the power transmission unit and the power reception unit such that the absolute value (difference in natural frequency) of the deviation (%) in natural frequency falls within a range of 10% or less of the natural frequency of power reception unit 96. Further, it is understood that the power transfer efficiency can be more improved by setting the natural frequency of each of the power transmission unit and the power reception unit such that the absolute value of the deviation (%) in natural frequency falls within a range of 5% or less of the natural frequency of power reception unit 96. It is to be noted that electromagnetic field analysis software (JMAG® provided by JSOL Corporation) is employed as simulation software.

The following describes an operation of the power transfer system according to the present embodiment.

In Fig. 1, first coil 58 is supplied with AC power from high-frequency power driver 54. On this occasion, the electric power is supplied such that the alternating current flowing through first coil 58 has a specific frequency.

When the current having the specific frequency flows through first coil 58, an electromagnetic field, which oscillates at the specific frequency, is formed around first coil 58.

Second coil 22 is disposed in a predetermined range from first coil 58 and receives electric power from the electromagnetic field formed around first coil 58.

In the present embodiment, helical coils are employed for second coil 22 and first coil 58. Accordingly, magnetic field and electric field, which oscillate at the specific frequency, are formed around first coil 58, and second coil 22 receives electric power mainly from the magnetic field.

Here, the following describes the magnetic field formed around first coil 58 and having the specific frequency. The "magnetic field having the specific frequency" is typically relevant to the power transfer efficiency and the frequency of current supplied to first coil 58. First described is a relation between the power transfer efficiency and the frequency of current supplied to first coil 58. The power transfer efficiency when transferring electric power from first coil 58 to second coil 22 is changed depending on various factors such as a distance between first coil 58 and second coil 22. For example, the natural frequencies (resonance frequencies) of power transmission unit 56 and power reception unit 20 are assumed as natural frequency f0, the frequency of current supplied to first coil 58 is assumed as frequency f3, and the air gap between second coil 22 and first coil 58 is assumed as air gap AG.

Fig. 17 is a graph indicating a relation between the power transfer efficiency and frequency f3 of current supplied to first coil 58 when air gap AG is changed with natural frequency f0 being fixed.

In the graph shown in Fig. 17, the horizontal axis represents frequency f3 of the current supplied to first coil 58 whereas the vertical axis represents the power transfer efficiency (%). An efficiency curve L1 schematically represents a relation between the power transfer efficiency when air gap AG is small and frequency f3 of the current supplied to first coil 58. As indicated by efficiency curve L1, when air gap AG is small, peaks of the power transfer efficiency appear at frequencies f4, f5 (f4 < f5). When air gap AG is made larger, the two peaks at which the power transfer efficiency becomes high are changed to come closer to each other. Then, as indicated by an efficiency curve L2, when air gap AG is made larger than a predetermined distance, one peak of the power transfer efficiency appears. The peak of the power transfer efficiency appears when the current supplied to first coil 58 has a frequency f6. When air gap AG is made further larger from the state of efficiency curve L2, the peak of the power transfer efficiency becomes smaller as indicated by an efficiency curve L3.

For example, as a technique of improving the power transfer efficiency, the following first technique can be considered. The first technique is to change a characteristic of the power transfer efficiency between power transmission unit 56 and power reception unit 20 by changing the capacitances of capacitor 59 and capacitor 23 in accordance with air gap AG with the frequency of the current supplied to first coil 58 shown in Fig. 1 being constant. Specifically, with the frequency of the current supplied to first coil 58 being constant, the capacitances of capacitor 59 and capacitor 23 are adjusted to attain a peak of the power transfer efficiency. In this technique, irrespective of the size of air gap AG, the frequency of the current flowing through first coil 58 and second coil 22 is constant. It is to be noted that as the technique of changing the characteristic of the power transfer efficiency, the following techniques can be also employed: a technique of using a matching device provided between power transmission device 50 and high-frequency power driver 54; and a technique of using converter 14.

Meanwhile, a second technique is a technique of adjusting, based on the size of air gap AG, the frequency of the current supplied to first coil 58. For example, in Fig. 17, when the power transfer characteristic corresponds to efficiency curve L1, first coil 58 is supplied with current having frequency f4 or frequency f5. On the other hand, when the frequency characteristic corresponds to efficiency curve L2 or L3, first coil 58 is supplied with current having frequency f6. In this case, the frequency of the current flowing in each of first coil 58 and second coil 22 is changed in accordance with the size of air gap AG.

In the first technique, the frequency of the current flowing though first coil 58 becomes a fixed, constant frequency. In the second technique, the frequency thereof flowing through first coil 58 becomes a frequency appropriately changed according to air gap AG. With the first technique, the second technique, or the like, first coil 58 is supplied with current having a specific frequency set to attain high power transfer efficiency. Because the current having the specific frequency flows through first coil 58, a magnetic field (electromagnetic field), which oscillates at the specific frequency, is formed around first coil 58. Power reception unit 20 receives electric power from power transmission unit 56 via the magnetic field formed between power reception unit 20 and power transmission unit 56 and oscillating at the specific frequency.

Therefore, "the magnetic field oscillating at the specific frequency" is not necessarily a magnetic field having a fixed frequency. It is to be noted that in the above-described example, the frequency of the current supplied to first coil 58 is set based on air gap AG, but the power transfer efficiency is also changed according to other factors such as a deviation in the horizontal direction between first coil 58 and second coil 22, so that the frequency of the current supplied to first coil 58 may be adjusted based on the other factors.

It is to be also noted that the example employing the helical coil as the resonance coil has been illustrated, but when an antenna such as a meander line antenna is employed as the resonance coil, an electric field having the specific frequency is formed around first coil 58 as a result of flow of the current having the specific frequency through first coil 58. Through this electric field, electric power is transferred between power transmission unit 56 and power reception unit 20.

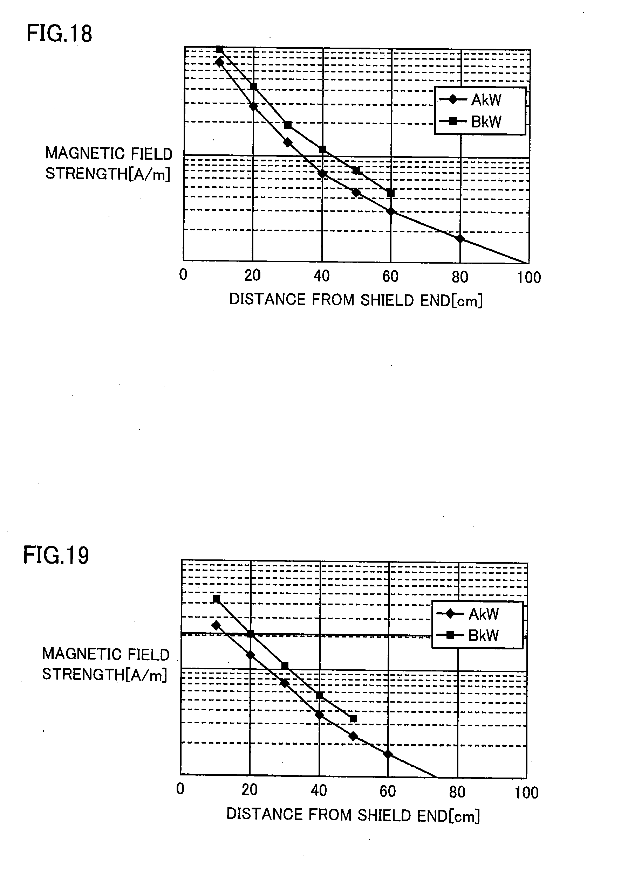

In the power transfer system according to the present embodiment, efficiency in power transmission and power reception is improved by employing a near field (evanescent field) in which an "electrostatic magnetic field" of the electromagnetic field is dominant. Fig. 18 shows a relation between a distance from the electric current source or magnetic current source and the strength of the electromagnetic field. Referring to Fig. 18, the electromagnetic field is constituted of three components. A curve k1 represents a component in inverse proportion to the distance from the wave source, and is referred to as a "radiation electromagnetic field". A curve k2 represents a component in inverse proportion to the square of the distance from the wave source, and is referred to as an "induction electromagnetic field". A curve k3 represents a component in inverse proportion to the cube of the distance from the wave source, and is referred to as an "electrostatic magnetic field". Assuming that the wavelength of the electromagnetic field is represented by "$\lambda$", $\lambda/2\pi$ represents a distance in which the strengths of the "radiation electromagnetic field", the "induction electromagnetic field" and the "electrostatic magnetic field" are substantially the same.

The "electrostatic magnetic field" is a region in which the strength of the electromagnetic wave is abruptly decreased as the distance is farther away from the wave source. In the power transfer system according to the present embodiment, the near field (evanescent field), in which this "electrostatic magnetic field" is dominant, is utilized for transfer of energy (electric power). In other words, by resonating power transmission unit 56 and power reception unit 20 (for example, a pair of LC resonant coils) having close natural frequencies in the near field in which the "electrostatic magnetic field" is dominant, the energy (electric power) is transferred from power transmission unit 56 to the other side, i.e., power reception unit 20. This "electrostatic magnetic field" does not propagate energy to a distant place. Hence, the resonance method allows for electric power transmission with less energy loss as compared with the electromagnetic wave in which the "radiation electromagnetic field" propagating energy to a distant place is utilized to transfer energy (electric power).

Thus, in this power transfer system, by resonating the power transmission unit and the power reception unit with each other through the electromagnetic field, electric power can be transmitted contactlessly between the power transmission unit and the power reception unit. The electromagnetic field thus formed between the power reception unit and the power transmission unit may be called, for example, a "near field resonance coupling field". Further, a coupling coefficient $\kappa$ between the power transmission unit and the power reception unit is about 0.3 or less, preferably, 0.1 or less, for example. Coupling coefficient $\kappa$ may also fall within a range of about 0.1 to about 0.3. Coupling coefficient $\kappa$ is not limited to such a value, and various values to attain excellent electric power transfer can be employed.

The coupling between power transmission unit 56 and power reception unit 20 during electric power transfer in the present embodiment is called, for example, "magnetic resonance coupling", "magnetic field resonance coupling", "magnetic field resonance coupling", "near field resonance coupling", "electromagnetic field resonance coupling", or "electric field resonance coupling".

The term "electromagnetic field resonance coupling" is intended to indicate coupling including any of the "magnetic resonance coupling", the "magnetic field resonance coupling", and the "electric field resonance coupling".

Each of first coil 58 of power transmission unit 56 and second coil 22 of power reception unit 20 as described in the present specification employs an antenna having a coil shape, so that power transmission unit 56 and power reception unit 20 are coupled to each other mainly by a magnetic field. Thus, power transmission unit 56 and power reception unit 20 are coupled to each other by means of the "magnetic resonance coupling" or the "magnetic field resonance coupling".

It is to be noted that an antenna such as a meander line antenna can be employed as first coil 58, 22, for example. In this case, power transmission unit 56 and power reception unit 20 are coupled to each other mainly through electric field. On this occasion, power transmission unit 56 and power reception unit 20 are coupled to each other by means of the "electric field resonance coupling".

In Fig. 13, when transferring electric power between power reception unit 20 and power transmission unit 56, first coil 58 is supplied with alternating current having a predetermined frequency.

By supplying the predetermined alternating current to first coil 58, an electromagnetic field oscillating at a predetermined frequency is formed around first coil 58. Then, second coil 22 receives electric power from the electromagnetic field. Moreover, a magnetic path 65 is formed between power reception unit 20 and power transmission unit 56.

Magnetic path 65 is formed to pass through protrusion portion 29a, the inside of second coil 22, protrusion portion 29b, the air gap, protrusion portion 64b, the inside of first coil 58, protrusion portion 64a, the air gap, and protrusion portion 29a.

Each of Fig. 18 and Fig. 19 is a graph showing distribution of strength of the magnetic field formed around second coil 22. Fig. 18 is a graph showing distribution of the magnetic field in the direction in which winding axis O1 extends. The horizontal axis of the graph shown in Fig. 18 represents a distance (cm) from wall portion 25c or wall portion 25e shown in Fig. 9 in the direction in which winding axis O1 extends. The vertical axis of the graph represents the magnetic field strength.

Fig. 19 is a graph showing distribution of the magnetic field in the direction perpendicular to winding axis O1. As shown in Fig. 18, the horizontal axis of the graph represents a distance (cm) from wall portion 25d or wall portion 25f shown in Fig. 9 in the direction perpendicular to winding axis O1. The vertical axis of the graph represents the strength of the magnetic field.

As shown in Fig. 18 and Fig. 19, it is understood that a magnetic field having high strength is distributed to be long in the direction in which winding axis O1 extends.

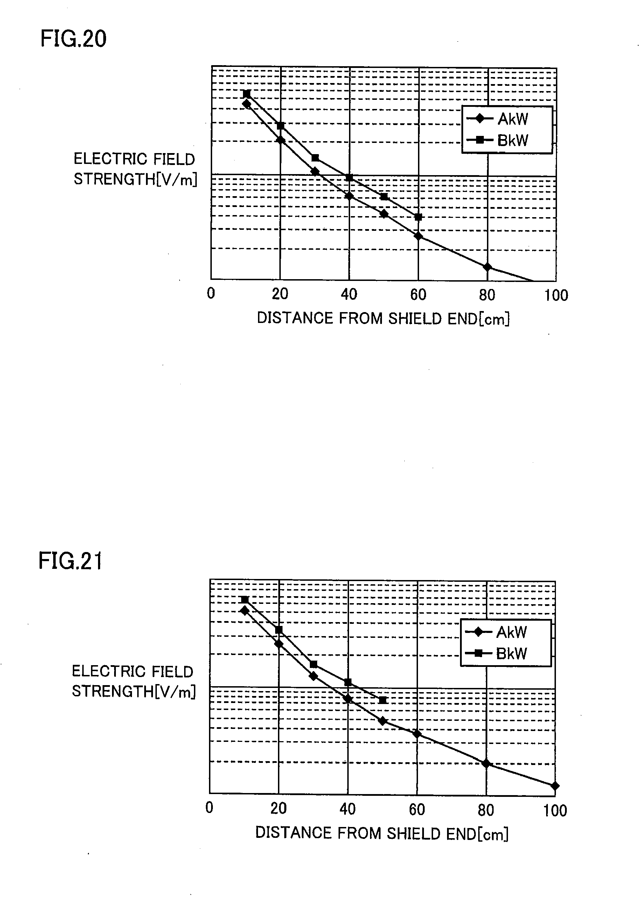

Each of Fig. 20 and Fig. 21 is a graph showing distribution of the electric field formed around second coil 22. Fig. 20 is a graph showing distribution of the electric field in the direction in which winding axis O1 extends. The horizontal axis of the graph represents a distance (cm) from wall portion 25c or wall portion 25e shown in Fig. 9 in the direction in which winding axis O1 extends. The vertical axis represents the strength of the electric field.

Fig. 21 is a graph showing distribution of the electric field in the direction perpendicular to winding axis O1. The horizontal axis represents a distance (cm) from wall portion 25d or wall portion 25f shown in Fig. 13 in the direction perpendicular to winding axis O1.

As shown in Fig. 20 and Fig. 21, it is understood that the electric field is distributed to be long in the direction perpendicular to winding axis O1. On the other hand, as apparent from Fig. 20 and Fig. 21, it is understood that the strength of the electric field itself is weak.

Here, in Fig. 14, second coil 22 is disposed such that winding axis O1 extends in traveling direction D1. Accordingly, protrusion portion 29a and protrusion portion 29b sandwich second coil 22 therebetween, and are arranged in traveling direction D1.

In Fig. 14, region R1 surrounded by a double dashed line represents a region having high strength in the electromagnetic field formed around second coil 22 during transfer of electric power.

A magnetic path is formed to pass through protrusion portion 29a and protrusion portion 29b arranged in the direction in which winding axis O1 extends. As shown in Fig. 14, the electromagnetic field having high strength is distributed to be long in the direction in which winding axis O1 extends and to be short in the direction perpendicular to the direction in which winding axis O1 extends.

Since charging portion 78 and refueling portion 77 each are provided at a position away from winding axis O1, the electromagnetic field having high strength can be suppressed from reaching charging portion 78 and refueling portion 77 during transfer of electric power. The expression "charging portion 78 and refueling portion 77 each are provided at a position away from winding axis O1" means that charging portion 78 and winding axis O1 do not overlap with each other, and also refueling portion 77 and winding axis O1 do not overlap with each other, when charging portion 78, refueling portion 77 and winding axis O1 are viewed in plan from above in the direction vertical to electrically powered vehicle 10.

Accordingly, when second coil 22 receives electric power, an electrical device carried by the operator or a device mounted in the refueling plug can be suppressed from being affected, during the refueling operation, by the electromagnetic field formed around second coil 22.

Similarly, when second coil 22 receives electric power, an electrical device provided in charging portion 78 or an electrical device carried by the operator can be suppressed from being affected, during the charging operation using charging portion 78, by the electromagnetic field formed around second coil 22.

When electric power is transferred between power transmission unit 56 and power reception unit 20, charging of battery 15 using charging portion 78 may be inhibited, or supply of a fuel to fuel tank 79 using refueling portion 77 may be inhibited.

Also in such electrically powered vehicle 10, the driver or the operator may forget that electric power is being transferred between power transmission unit 56 and power reception unit 20, and may come closer to charging portion 78 or refueling portion 77.

Also in this case, the electrical device carried by the driver or the operator can be suppressed from being affected by the electromagnetic field.

Here, the imaginary line extending through the center portion of bottom surface 76 in width direction D2 and extending in traveling direction D1 is defined as a center line 02 of electrically powered vehicle 10. In the example shown in Fig. 14, second coil 22 is disposed such that winding axis O1 of second coil 22 and center line 02 are aligned with each other.

In Fig. 14, the second distance (the shorter one of distance L4 and distance L5) is longer than the first distance (the shorter one of distance L6 and distance L7).

Accordingly, even if region R1 is distributed to be long in traveling direction D1, the electromagnetic field having high strength can be suppressed from reaching the electrical device carried by the operator or the like, even when the operator or the like comes closer to around charging portion 78 and refueling portion 77.

It is to be noted that region R1 is relatively long in width direction D2 in the center portion of second coil 22 in the direction in which winding axis O1 extends.

Refueling portion 77 and charging portion 78 are disposed at the front side relative to coil center P2 of second coil 22 in traveling direction D 1. Accordingly, even if the operator or the like comes closer to around charging portion 78 and refueling portion 77, the electromagnetic field having high strength can be suppressed from reaching the electrical device carried by the operator or the like.

Second coil 22 is disposed such that winding axis O1 passes through front surface 73 and rear surface 74, and an electromagnetic field having high strength is distributed around coil 22 in the direction in which winding axis O1 extends.

On the other hand, refueling portion 77 and charging portion 78 are provided in right side surface 72 or left side surface 71 different from front surface 73 and rear surface 74 among the circumferential surfaces of electrically powered vehicle 10. Accordingly, even if the operator performs a refueling operation and a charging operation using refueling portion 77 and charging portion 78, the electronic device carried by the operator can be suppressed from being affected by the electromagnetic field.

Front surface 73 is a surface among the circumferential surfaces of electrically powered vehicle 10 that is farthest away from coil center P2 and second coil 22. Refueling portion 77 is provided at a position in left side surface 71 that is close to front surface 73 relative to rear surface 74. Accordingly, even if an electromagnetic field is formed around second coil 22 during contactless charging, an electromagnetic field having high strength can be suppressed from reaching refueling portion 77.

Similarly, charging portion 78 is provided at a position close to front surface 73 relative to rear surface 74. Thus, an electromagnetic field having high strength can be suppressed from reaching charging portion 78 during contactless charging.

Accordingly, even if the operator performs a refueling operation using refueling portion 77 or performs a charging operation during contactless charging, the electronic device carried by the operator can be suppressed from being affected by the electromagnetic field.

(Second Embodiment)

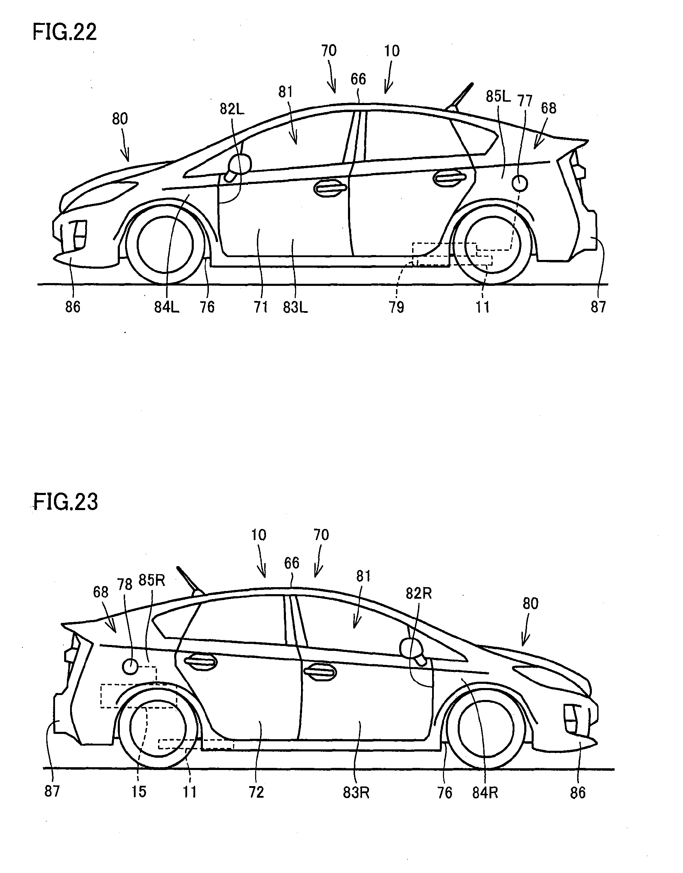

With reference to Fig. 22 to Fig. 24, the following describes an electrically powered vehicle 10 according to the present second embodiment. It is to be noted that those of the configurations shown in Fig. 22 to Fig. 24 that are identical or correspond to the configurations shown in Fig. 1 to Fig. 21 are designated by the same reference characters, and description thereof may not be repeated.

Fig. 22 is a left side view of electrically powered vehicle 10 according to the second embodiment. Fig. 23 is a right side view of electrically powered vehicle 10.

As shown in this Fig. 22, refueling portion 77 is provided in rear fender 85L provided in left side surface 71 of electrically powered vehicle 10. As shown in Fig. 23, charging portion 78 is provided in rear fender 85R.

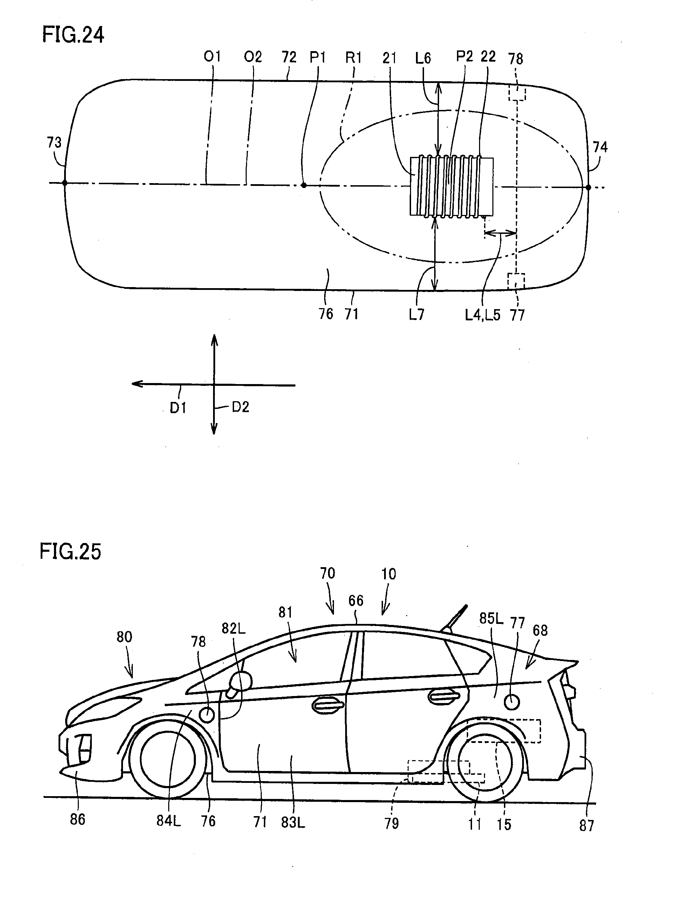

Fig. 24 is a plan view schematically showing electrically powered vehicle 10 when electrically powered vehicle 10 is viewed from above in the direction vertical to electrically powered vehicle 10. In this Fig. 23, second coil 22 is disposed such that winding axis O1 extends from rear surface 74 to front surface 73. Also, each of charging portion 78 and refueling portion 77 is provided at a position away from winding axis 01. Accordingly, even if the operator or the like comes closer to around charging portion 78 and refueling portion 77, an electromagnetic field having high strength can be suppressed from reaching the electrical device carried by the operator or the like.

Refueling portion 77 and charging portion 78 are located at the rear side relative to coil center P2 of second coil 22 in traveling direction D1. Accordingly, even if the operator or the like comes closer to around charging portion 78 and refueling portion 77 during transfer of electric power, an electromagnetic field having high strength can be suppressed from reaching the electrical device carried by the operator or the like.

(Third Embodiment)

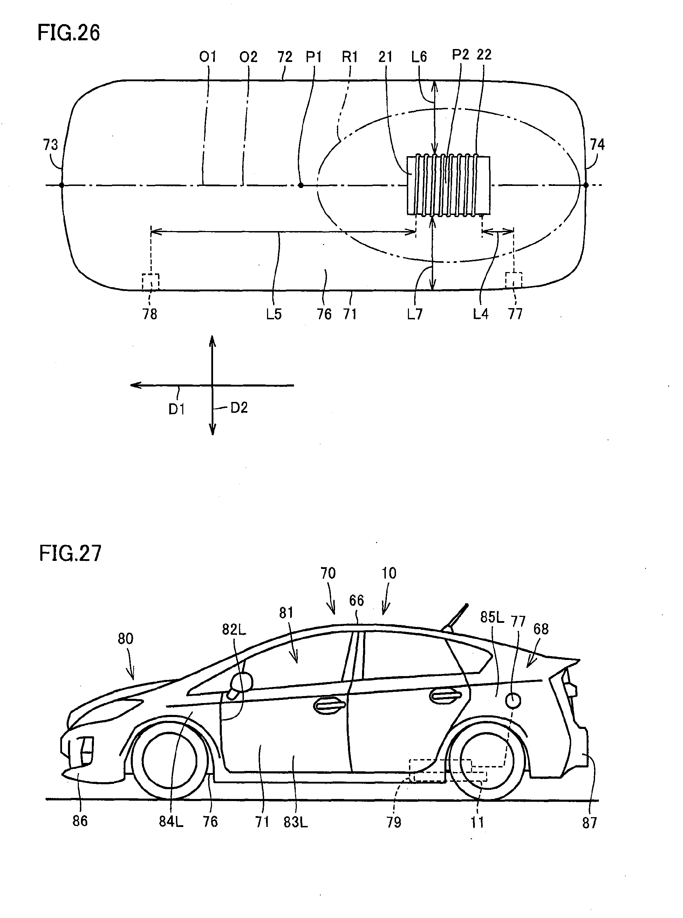

With reference to Figs. 25 and 26, electrically powered vehicle 10 according to the present third embodiment will be hereinafter described. It is to be noted that those of the configurations shown in Figs. 25 and 26 that are identical or correspond to the configurations shown in Figs. 1 to 24 are designated by the same reference characters, and description thereof may not be repeated.

Fig. 25 is a left side view of electrically powered vehicle 10 according to the third embodiment. Fig. 26 is a plan view schematically showing electrically powered vehicle 10 when electrically powered vehicle 10 is viewed from above in the direction vertical to electrically powered vehicle 10.

In Fig. 25, charging portion 78 is provided in front fender 84L of left side surface 71, and refueling portion 77 is provided in rear fender 85L of left side surface 71.

In Fig. 26, refueling portion 77 and charging portion 78 each are provided at a position away from winding axis O1. Furthermore, distance L5 between charging portion 78 and second coil 22 in traveling direction D1 is longer than each of distance L6 and distance L7.

Also in the present embodiment, second coil 22 is disposed such that winding axis O1 passes through front surface 73 and rear surface 74. Refueling portion 77 and charging portion 78 are provided in left side surface 71, and also in a surface different from front surface 73 and rear surface 74. Accordingly, an electromagnetic field having high strength can be suppressed from reaching refueling portion 77 and charging portion 78 during contactless charging.

Second coil 22 is provided at a position close to rear surface 74 relative to front surface 73. The surface among left side surface 71, right side surface 72, front surface 73, and rear surface 74 that is farthest away from second coil 22 is front surface 73.

Charging portion 78 is provided at a position close to front surface 73 relative to rear surface 74, so that an electromagnetic field having high strength can be suppressed from reaching charging portion 78.

Accordingly, even if the operator or the like comes closer to around charging portion 78 during transfer of electric power, an electromagnetic field having high strength can be suppressed from reaching the electrical device carried by the operator or the like. It is to be noted that distance L4 between refueling portion 77 and second coil 22 in traveling direction D1 is shorter than each of distance L6 and distance L7. On the other hand, refueling portion 77 is disposed at the rear side relative to the center portion of second coil 22 in traveling direction D 1. Accordingly, even if the operator or the like comes closer to around refueling portion 77 during transfer of electric power, an electromagnetic field having high strength can be suppressed from reaching the electrical device carried by the operator or the like.

Charging portion 78 is provided with a sensor or the like that senses whether the charging plug is connected or not. On the other hand, since distance L5 is longer than distance L4, the strength of the electromagnetic field that reaches charging portion 78 is weaker than the strength of the electromagnetic field that reaches refueling portion 77. Accordingly, electrical devices such as a sensor provided in charging portion 78 are less influenced by an electromagnetic field. Therefore, it is conceivable to perform a charging operation using charging portion 78 while electric power is being contactlessly transferred between power reception unit 20 and power transmission unit 56. Also in this case, an electromagnetic field having high strength can be suppressed from reaching the charging operator when the charging operator performs a charging operation.

Although second coil 22 is disposed in the center portion of bottom surface 76 in width direction D2, the layout position of second coil 22 is not limited thereto. For example, second coil 22 may be disposed to be closer to the side surface (right side surface 72) opposite to the side surface (left side surface 71) in which refueling portion 77 and charging portion 78 are provided. In this case, an electromagnetic field having high strength can be suppressed from reaching refueling portion 77 and charging portion 78.

Although charging portion 78 is disposed at a position farther away from second coil 22 than refueling portion 77 in the present third embodiment, refueling portion 77 may be provided at a position away from charging portion 78.

(Fourth Embodiment)

With reference to Figs. 27 to 29, electrically powered vehicle 10 according to the present fourth embodiment will be hereinafter described. Those of the configurations shown in Figs. 27 to 29 that are identical or correspond to the configurations shown in Figs. 1 to 26 are designated by the same reference characters, and description thereof may not be repeated.

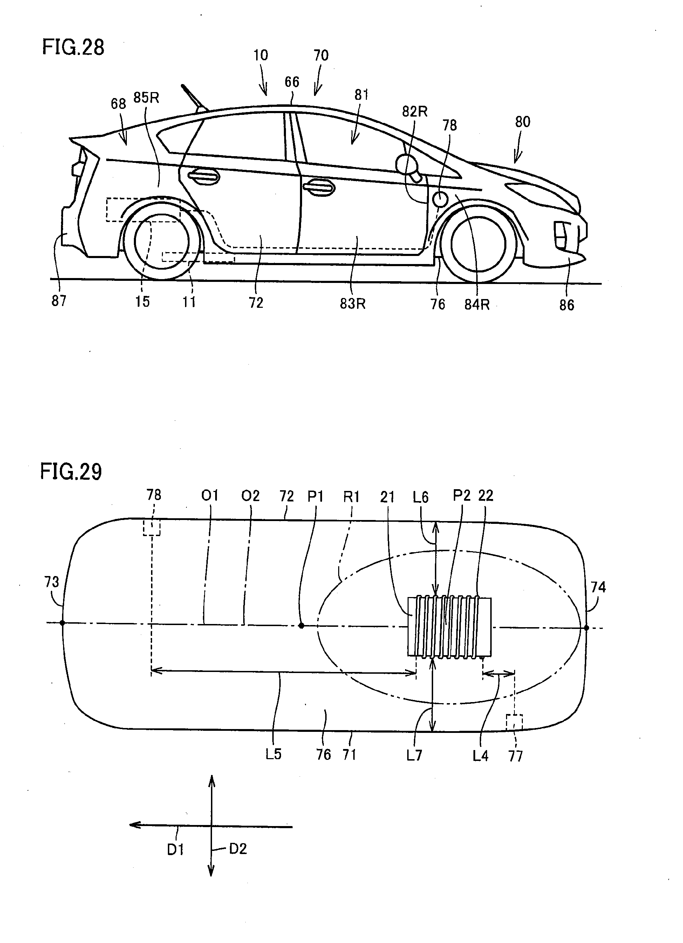

Fig. 27 is a left side view of electrically powered vehicle 10 according to the fourth embodiment. Fig. 28 is a right side view of electrically powered vehicle 10. As shown in Fig. 27, refueling portion 77 is provided in rear fender 85L of left side surface 71. As shown in Fig. 28, charging portion 78 is provided in front fender 84R of right side surface 72.

Fig. 29 is a plan view schematically showing electrically powered vehicle 10 when electrically powered vehicle 10 is viewed from above in the direction vertical to electrically powered vehicle 10. As shown in this Fig. 29, charging portion 78 and refueling portion 77 each are disposed at a position away from winding axis O1. Distance L5 between charging portion 78 and second coil 22 is greater than each of distance L6 and distance L7. Accordingly, even if the operator or the like comes closer to around charging portion 78, an electromagnetic field having high strength can be suppressed from reaching the electrical device carried by the operator or the like.

In addition, also in the present embodiment, winding axis O1 passes through front surface 73 and rear surface 74, while charging portion 78 and refueling portion 77 each are provided in a surface different from front surface 73 and rear surface 74. Furthermore, second coil 22 is provided at a position close to rear surface 74 relative to front surface 73, and charging portion 78 is provided at a position close to front surface 73 relative to rear surface 74.

Furthermore, refueling portion 77 is disposed at the rear side relative to coil center P2 of second coil 22 in traveling direction D1. Accordingly, even if the operator or the like comes closer to around refueling portion 77, an electromagnetic field having high strength can be suppressed from reaching the electrical device carried by the operator or the like.

As a modification of the position in which second coil 22 is mounted, for example, second coil 22 may be disposed so as to be close to the side surface (left side surface 71), which is provided with refueling portion 77, relative to the side surface (right side surface 72), which is provided with charging portion 78.

(Fifth Embodiment)

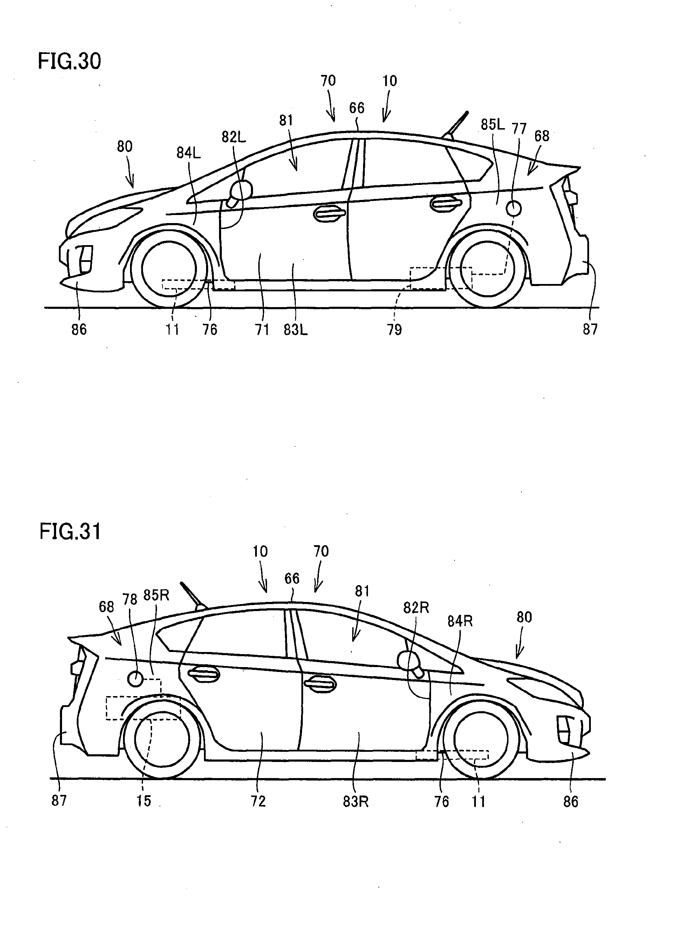

With reference to Figs. 30 to 32, electrically powered vehicle 10 according to the present fifth embodiment will be hereinafter described. It is to be noted that those of the configurations shown in Figs. 30 to 32 that are identical or correspond to the configurations shown in Figs. 1 to 29 are designated by the same reference characters, and description thereof may not be repeated.

Fig. 30 is a left side view of electrically powered vehicle 10 according to the fifth embodiment. Fig. 31 is a right side view. In Fig. 30, refueling portion 77 is provided in rear fender 85L of left side surface 71. In Fig. 31, charging portion 78 is provided in rear fender 85R of right side surface 72.

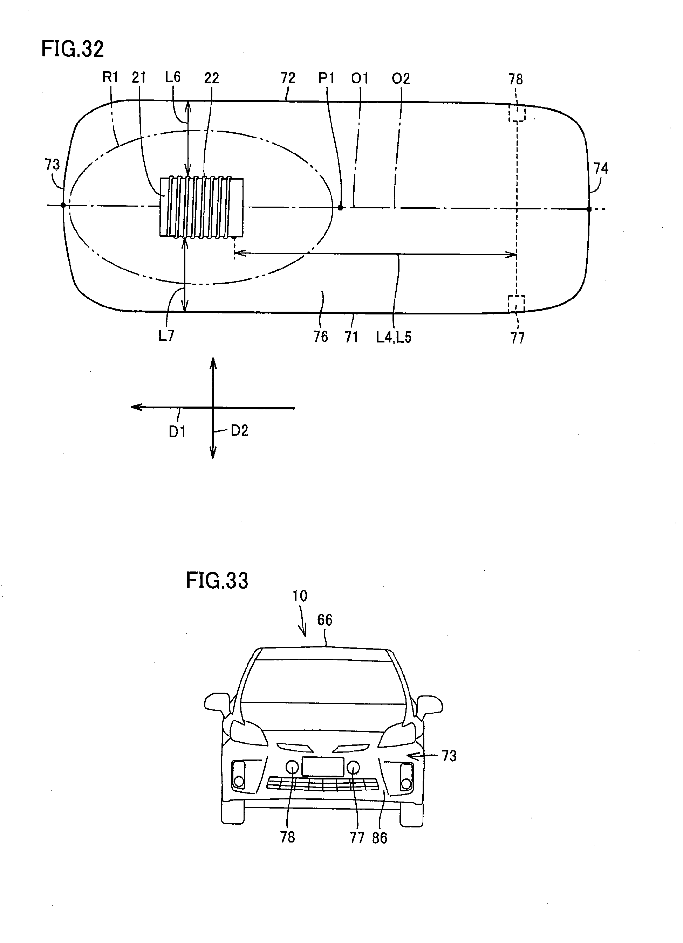

Fig. 32 is a plan view schematically showing electrically powered vehicle 10 when electrically powered vehicle 10 is viewed from above in the direction vertical to electrically powered vehicle 10. In this Fig. 31, charging portion 78 and refueling portion 77 each are disposed at a position away from winding axis O1.

Second coil 22 is disposed so as to be close to front surface 73 relative to rear surface 74 in traveling direction D1, and disposed at the front side relative to center portion P1 in traveling direction D1. Refueling portion 77 and charging portion 78 are disposed to be close to rear surface 74 relative to front surface 73, and also disposed at the rear side relative to center portion P1 in traveling direction D1. Refueling portion 77 and charging portion 78 are arranged in width direction D2.

Among left side surface 71, right side surface 72, front surface 73, and rear surface 74, rear surface 74 is farthest away from second coil 22. Charging portion 78 is provided at a position in right side surface 72 that is close to rear surface 74 relative to front surface 73. Refueling portion 77 is provided at a position in left side surface 71 that is close to rear surface 74 relative to front surface 73.

Accordingly, distance L4 and distance L5 are longer than each of distance L6 and distance L7. Therefore, even if the operator or the like comes closer to around charging portion 78 and refueling portion 77 during transfer of electric power, an electromagnetic field having high strength can be suppressed from reaching the electrical device carried by the operator or the like.

(Sixth Embodiment)

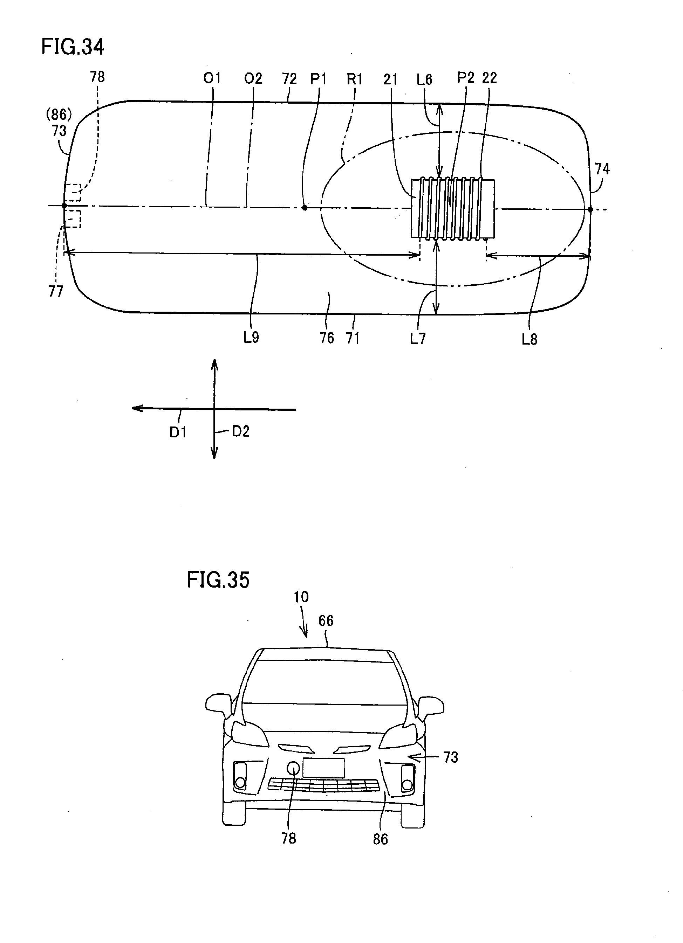

With reference to Figs. 33 and 34, electrically powered vehicle 10 according to the present sixth embodiment will be hereinafter described. It is to be noted that those of the configurations shown in Figs. 33 and 34 that are identical or correspond to the configurations shown in Figs. 1 to 32 are designated by the same reference characters, and description thereof may not be repeated.

Fig. 33 is a front view of electrically powered vehicle 10 according to the sixth embodiment. As shown in this Fig. 33, refueling portion 77 and charging portion 78 are provided in front bumper 86 of front surface 73.

Fig. 34 is a plan view schematically showing electrically powered vehicle 10 when electrically powered vehicle 10 is viewed from above in the direction vertical to electrically powered vehicle 10. In this Fig. 33, the distance between rear surface 74 and second coil 22 in traveling direction D1 is defined as a distance L8 while the distance between front surface 73 and second coil 22 in traveling direction D1 is defined as a distance L9. In this case, distance L9 is the longest distance among distances L6 to L9.

In other words, the surface among left side surface 71, right side surface 72, front surface 73, and rear surface 74 that is farthest away form second coil 22 is front surface 73. Also, refueling portion 77 and charging portion 78 are provided in front surface 73.

In this way, refueling portion 77 and charging portion 78 are disposed in a surface among the circumferential surfaces of electrically powered vehicle 10 that is farthest away from second coil 22. Accordingly, even if the operator or the like comes closer to around charging portion 78 and refueling portion 77 during transfer of electric power, an electromagnetic field having high strength can be suppressed from reaching the electrical device carried by the operator or the like.

Preferably, second coil 22 is disposed such that distance L8 is longer than distance L6 and distance L7. By arranging second coil 22 in this way, an electromagnetic field having high strength can be suppressed from leaking from between rear surface 74 and the ground and also suppressed from leaking from around the vehicle.

(Seventh Embodiment)

With reference to Figs. 35 to 37, electrically powered vehicle 10 according to the present seventh embodiment will be hereinafter described. It is to be noted that those of the configurations shown in Figs. 35 to 37 that are identical or correspond to the configurations shown in Figs. 1 to 34 are designated by the same reference characters, and description thereof may not be repeated.

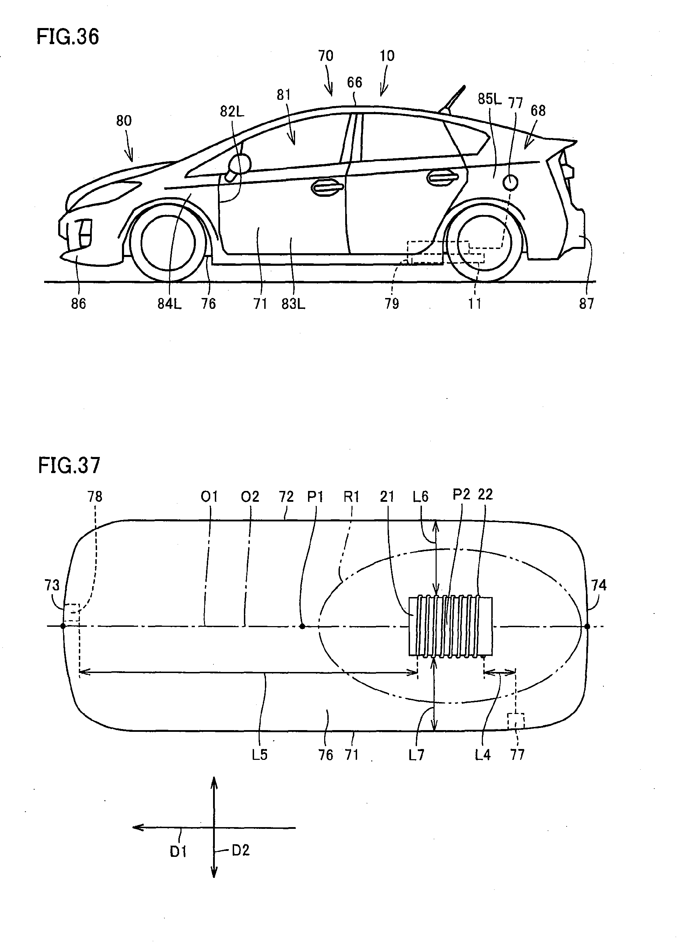

Fig. 35 is a front view of an electrically powered vehicle 10 according to the seventh embodiment. Fig. 36 is a left side view of electrically powered vehicle 10. As shown in Fig. 35, charging portion 78 is provided in front bumper 86 of front surface 73. As shown in Fig. 36, refueling portion 77 is provided in rear fender 85L of left side surface 71.

Fig. 37 is a plan view schematically showing electrically powered vehicle 10 when electrically powered vehicle 10 is viewed from above. As shown in this Fig. 37, second coil 22 is disposed at a position close to rear surface 74 relative to front surface 73 in traveling direction D1. Accordingly, among left side surface 71, right side surface 72, front surface 73, and rear surface 74, front surface 73 is farthest away from second coil 22.

Charging portion 78 is provided in front surface 73. Accordingly, even if the operator or the like comes closer to around charging portion 78 during transfer of electric power, an electromagnetic field having high strength can be suppressed from reaching the electrical device carried by the operator or the like.

Distance L5 between charging portion 78 and second coil 22 in traveling direction D1 is longer than each of distance L6 and distance L7. Accordingly, even if charging portion 78 is provided at a position where front surface 73 and winding axis O1 intersect with each other, an electromagnetic field having high strength can be suppressed from reaching the electrical device carried by the operator or the like even when the operator or the like comes closer to around charging portion 78.

It is to be noted that distance L4 between second coil 22 and refueling portion 77 in traveling direction D1 is shorter than each of distance L6 and distance L7. On the other hand, refueling portion 77 is located at the rear side, in traveling direction D1, relative to the center portion of second coil 22 in the direction in which winding axis O1 extends. Accordingly, an electromagnetic field having high strength can be suppressed from reaching refueling portion 77 during transfer of electric power. It is to be noted that refueling portion 77 may be located at the front side relative to the center portion of second coil 22 in traveling direction D 1.

(Eighth Embodiment)

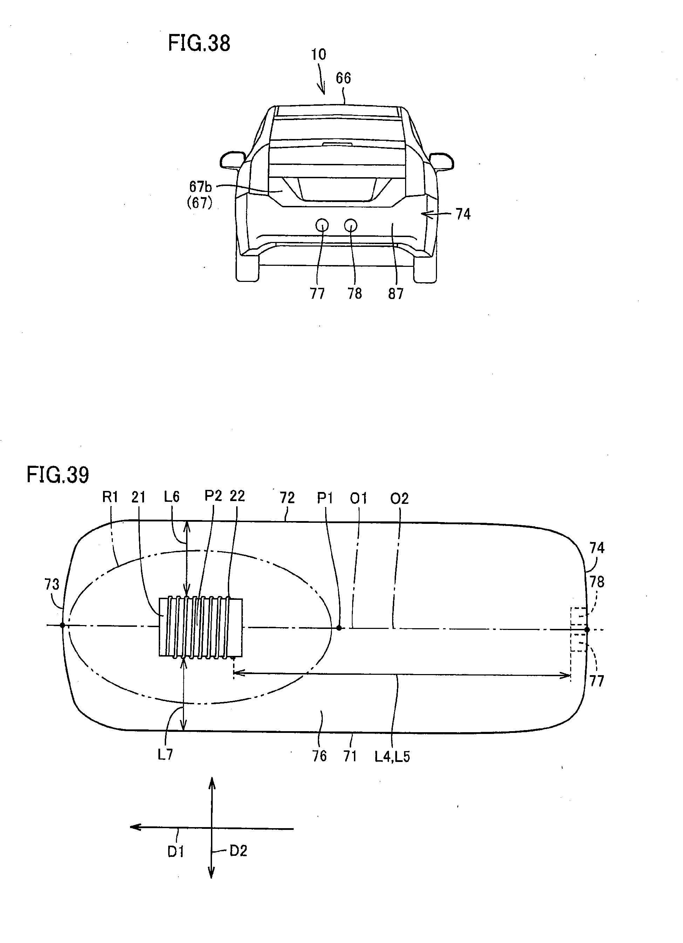

With reference to Figs. 38 and 39, electrically powered vehicle 10 according to the present eighth embodiment will be hereinafter described. It is to be noted that those of the configurations shown in Figs. 38 and 39 that are identical or correspond to the configurations shown in Figs. 1 to 37 are designated by the same reference characters, and description thereof may not be repeated.

Fig. 38 is a rear view of electrically powered vehicle 10 according to the eighth embodiment. As shown in this Fig. 38, refueling portion 77 and charging portion 78 each are provided in rear bumper 87 of rear surface 74.

Fig. 39 is a plan view schematically showing electrically powered vehicle 10 when electrically powered vehicle 10 is viewed from above in the direction vertical to electrically powered vehicle 10. Second coil 22 is provided at a position in bottom surface 76 that is close to front surface 73 relative to rear surface 74. Among left side surface 71, right side surface 72, front surface 73, and rear surface 74, rear surface 74 is farthest away from second coil 22.

Refueling portion 77 and charging portion 78 are provided in rear surface 74. Accordingly, even if the operator or the like comes closer to around charging portion 78 and refueling portion 77 during transfer of electric power, an electromagnetic field having high strength can be suppressed from reaching the electrical device carried by the operator or the like.

(Ninth Embodiment)

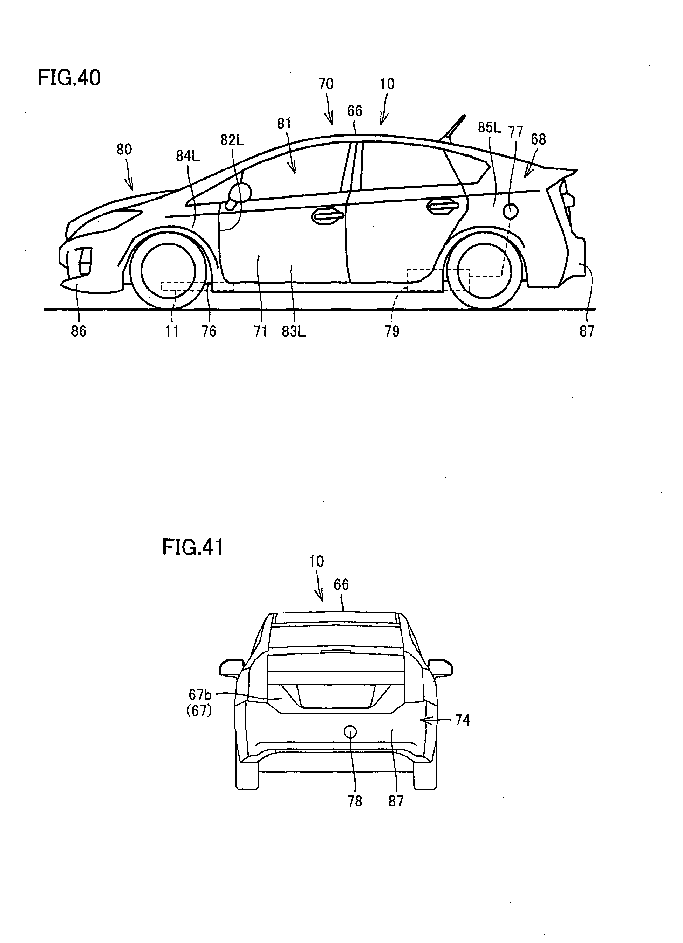

With reference to Figs. 40 to 42, electrically powered vehicle 10 according to the present ninth embodiment will be hereinafter described. It is to be noted that those of the configurations shown in Figs. 40 to 42 that are identical or correspond to the configurations shown in Figs. 1 to 39 are designated by the same reference characters, and description thereof may not be repeated.

Fig. 40 is a left side view of electrically powered vehicle 10 according to the ninth embodiment. Fig. 41 is a rear view of electrically powered vehicle 10.

In Fig. 40, refueling portion 77 is provided in rear fender 85L of left side surface 71. In Fig. 41, charging portion 78 is provided in rear bumper 87 of rear surface 74.

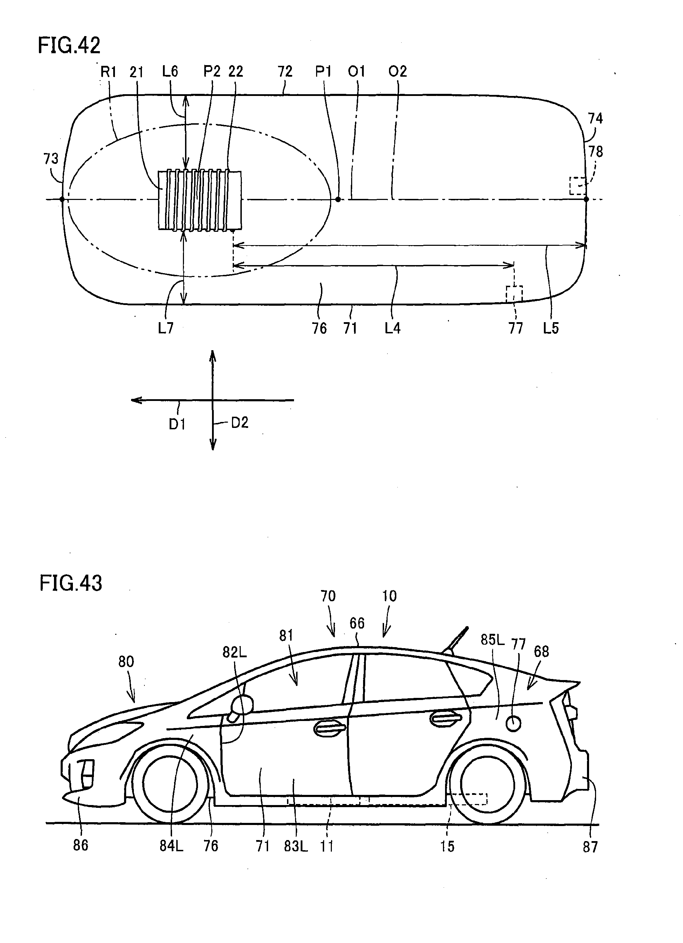

Fig. 42 is a plan view schematically showing electrically powered vehicle 10 when electrically powered vehicle 10 is viewed from above. In this Fig. 42, second coil 22 is disposed at a position in bottom surface 76 that is close to front surface 73 relative to rear surface 74, and also at the front side relative to center portion P1 in traveling direction D 1.

Accordingly, among left side surface 71, right side surface 72, front surface 73, and rear surface 74, rear surface 74 is farthest away from second coil 22. Charging portion 78 is provided in this rear surface 74. Accordingly, even if the operator or the like comes closer to around charging portion 78 during transfer of electric power, an electromagnetic field having high strength can be suppressed from reaching the electrical device carried by the operator or the like.

Refueling portion 77 is disposed at the rear side relative to the center portion of second coil 22 in traveling direction D1. Distance L4 between refueling portion 77 and second coil 22 in traveling direction D1 is longer than distance L6 and distance L7. Accordingly, even if the operator or the like comes closer to around refueling portion 77 during transfer of electric power, an electromagnetic field having high strength can be suppressed from reaching the electrical device carried by the operator or the like.

(Tenth Embodiment)

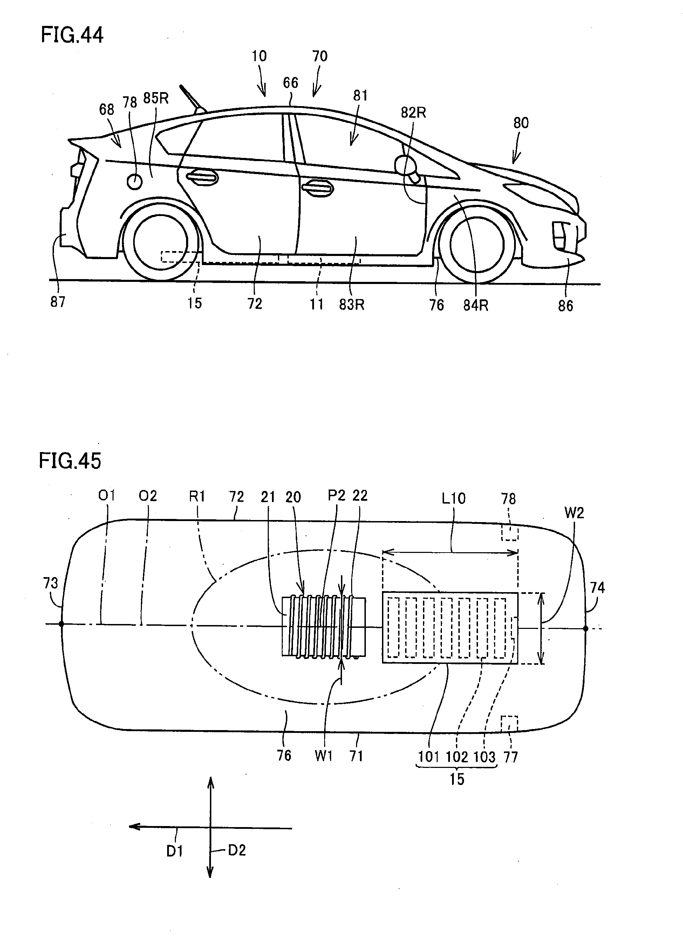

With reference to Figs. 43 to 47, electrically powered vehicle 10 according to the present tenth embodiment will be hereinafter described. Fig. 43 is a left side view of electrically powered vehicle 10 according to the tenth embodiment. In this Fig. 43, refueling portion 77 is provided in rear fender 85L of left side surface 71. In Fig. 44, charging portion 78 is provided in rear fender 85R of right side surface 72.

Fig. 45 is a plan view schematically showing electrically powered vehicle 10 when electrically powered vehicle 10 is viewed from above in the direction vertical to electrically powered vehicle 10. In Fig. 45, second coil 22 is disposed in the center portion of bottom surface 76. Battery 15 is disposed at the rear side in bottom surface 76 relative to second coil 22 in traveling direction D 1.

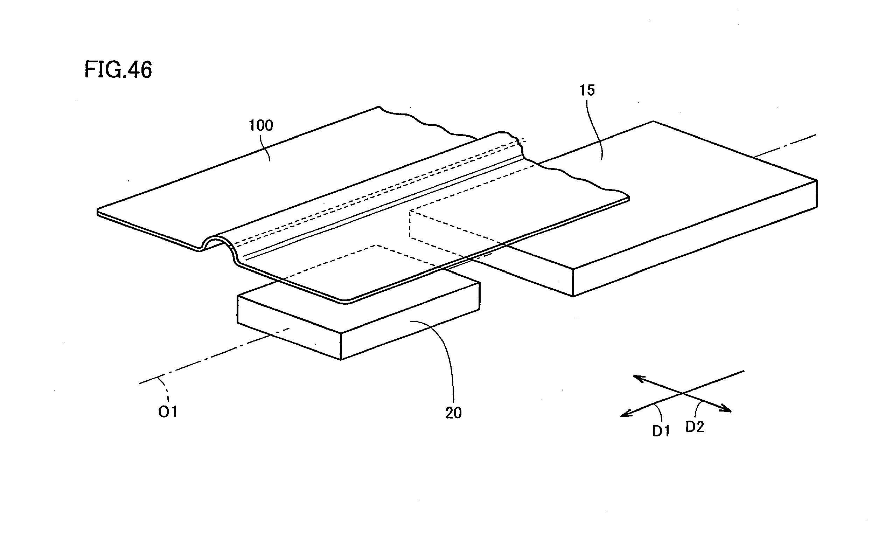

Fig. 46 is a perspective view showing power reception unit 20, battery 15 and floor panel 100. In Fig. 45, floor panel 100 is a member defining the bottom surface of electrically powered vehicle 10.

In Figs. 45 and 46, power reception unit 20 and battery 15 are arranged in the direction in which winding axis O1 extends. Accordingly, battery 15 serves to suppress expansion of the electromagnetic field during transfer of electric power.

Accordingly, an electromagnetic field having high strength can be suppressed from leaking to around electrically powered vehicle 10.

Battery 15 includes an end surface that faces power reception unit 20, and refueling portion 77 is provided at the rear side relative to this end surface in traveling direction D 1. Charging portion 78 is also located at the rear side relative to the end surface of battery 15 in traveling direction D1.

Accordingly, battery 15 suppresses propagation of an electromagnetic field. Thus, even if the operator or the like comes closer to around charging portion 78 and refueling portion 77, an electromagnetic field having high strength can be suppressed from reaching the electrical device carried by the operator or the like.

In the example shown in this Fig. 45, charging portion 78 is provided in right side surface 72 while refueling portion 77 is provided in left side surface 71, but charging portion 78 and refueling portion 77 may be provided in rear surface 74.

In this case, battery 15 is disposed between refueling portion 77 and charging portion 78. Thus, even if the operator or the like comes closer to around charging portion 78 and refueling portion 77, an electromagnetic field having high strength can be suppressed from reaching the electrical device carried by the operator or the like.

Assuming that the width of second coil 22 in width direction D2 is defined as a width W1 and the width of battery 15 in width direction D2 is defined as a width W2, width W2 is greater than width W1.

Accordingly, the electromagnetic field having high strength can be suppressed from propagating toward the rear side relative to battery 15 in traveling direction D1. Thus, even if the operator or the like comes closer to around charging portion 78 and refueling portion 77, an electromagnetic field having high strength can be suppressed from reaching the electrical device carried by the operator or the like.

Battery 15 includes a case 101, a plurality of battery cells 102 that are housed within this case 101, and a control unit 103 that is housed in case 101 and controls driving of battery cell 102.

The plurality of battery cells 102 are arranged in the direction in which winding axis O1 extends. Accordingly, an electromagnetic field having high strength is suppressed from passing through battery 15.

Control unit 103 is disposed across battery cell 102 from second coil 22.

By arranging at least one battery cell 102 between control unit 103 and second coil 22, an electromagnetic field having high strength can be suppressed from reaching control unit 103 during transfer of electric power.

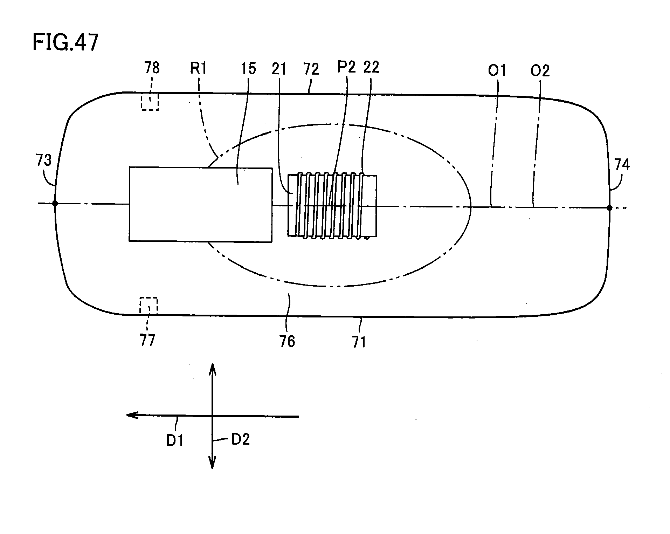

Fig. 47 is a plan view showing a modification of electrically powered vehicle 10 according to the present tenth embodiment. As shown in this Fig. 47, battery 15 may be disposed at the front side relative to second coil 22 in traveling direction D1. In this case, charging portion 78 and refueling portion 77 are disposed at the front side in traveling direction D1 relative to the end surface of battery 15 that faces second coil 22.

(Eleventh Embodiment)

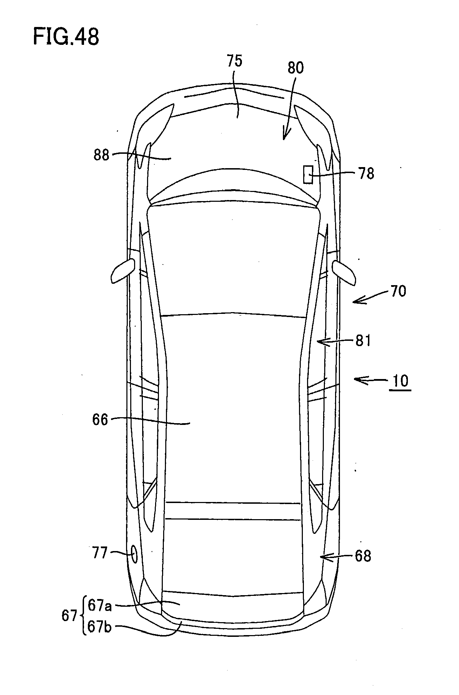

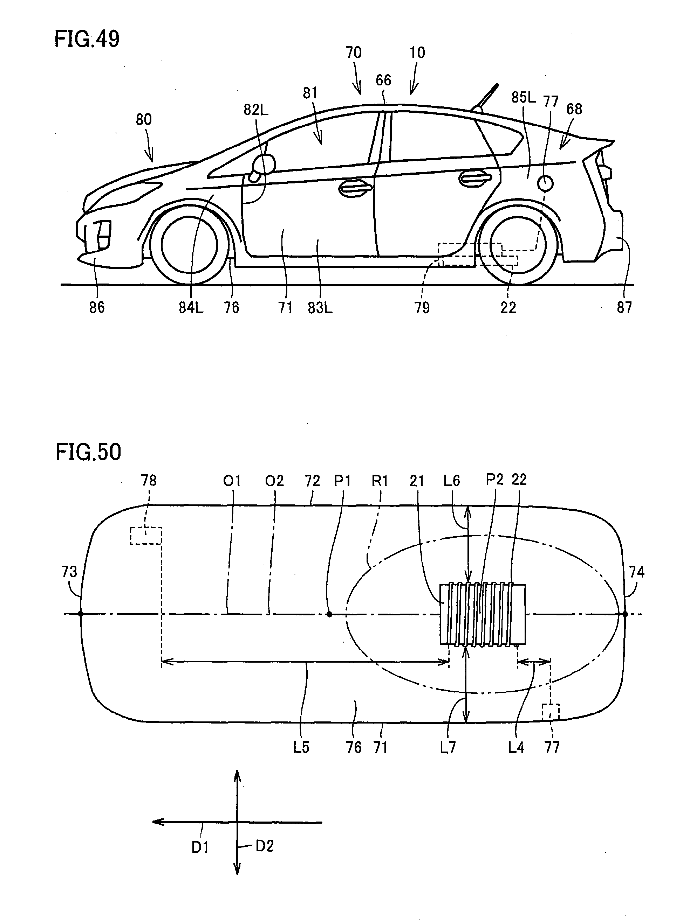

With reference to Figs. 48 to 50, electrically powered vehicle 10 according to the eleventh embodiment will be hereinafter described. Fig. 48 is a plan view of electrically powered vehicle 10 according to the eleventh embodiment. Fig. 49 is a left side view of electrically powered vehicle 10.

In Fig. 48, charging portion 78 is provided in an engine roof 88 of upper surface 75. Specifically, charging portion 78 is provided at a position of engine roof 88 that is close to right side surface 72 relative to left side surface 71. Charging portion 78 is also located to be close to right side surface 72 relative to the center portion of engine roof 88 in width direction D2. In Fig. 49, refueling portion 77 is provided in rear fender 85L of right side surface 72.

Fig. 50 is a plan view schematically showing electrically powered vehicle 10 when electrically powered vehicle 10 is viewed in plan from above in the direction vertical to electrically powered vehicle 10. In this Fig. 50, second coil 22 is provided at a position of bottom surface 76 that is close to rear surface 74 relative to front surface 73.

In this case, distance L5 between charging portion 78 and second coil 22 in traveling direction D1 is longer than the shorter one of distance L6 and distance L7, and is longer than each of distance L6 and distance L7.

Accordingly, even if the operator or the like comes closer to around charging portion 78 during transfer of electric power, an electromagnetic field having high strength can be suppressed from reaching the electrical device carried by the operator or the like. In particular, since charging portion 78 is provided in engine roof 88 of upper surface 75, an electromagnetic field having high strength can be suppressed from reaching charging portion 78.

Accordingly, the electrical device provided in charging portion 78 can be suppressed from being affected by the electromagnetic field.

It is to be noted that distance L4 between refueling portion 77 and second coil 22 in traveling direction D1 is shorter than the shorter one of distance L6 and distance L7. On the other hand, refueling portion 77 is disposed at the rear side relative to the center portion of second coil 22 in traveling direction D1. Accordingly, even if the operator or the like comes closer to around refueling portion 77, an electromagnetic field having high strength can be suppressed from reaching the electrical device carried by the operator or the like.

It is to be noted that refueling portion 77 may be disposed at the front side relative to second coil 22 in traveling direction D1. Furthermore, refueling portion 77 may be disposed such that distance L4 is longer than each of distance L6 and distance L7.

(Twelfth Embodiment)

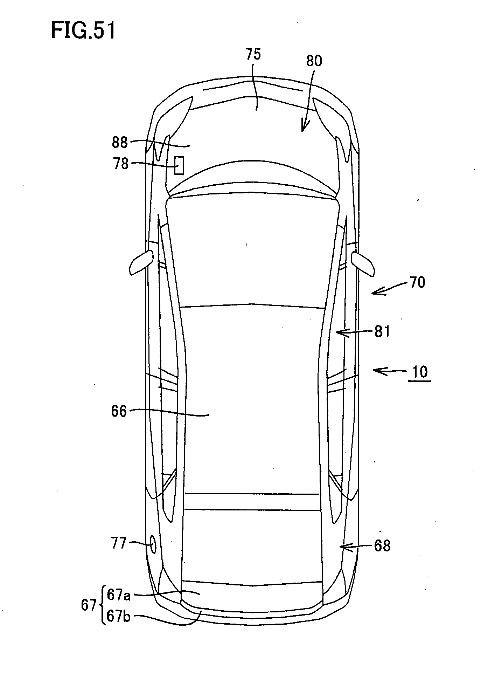

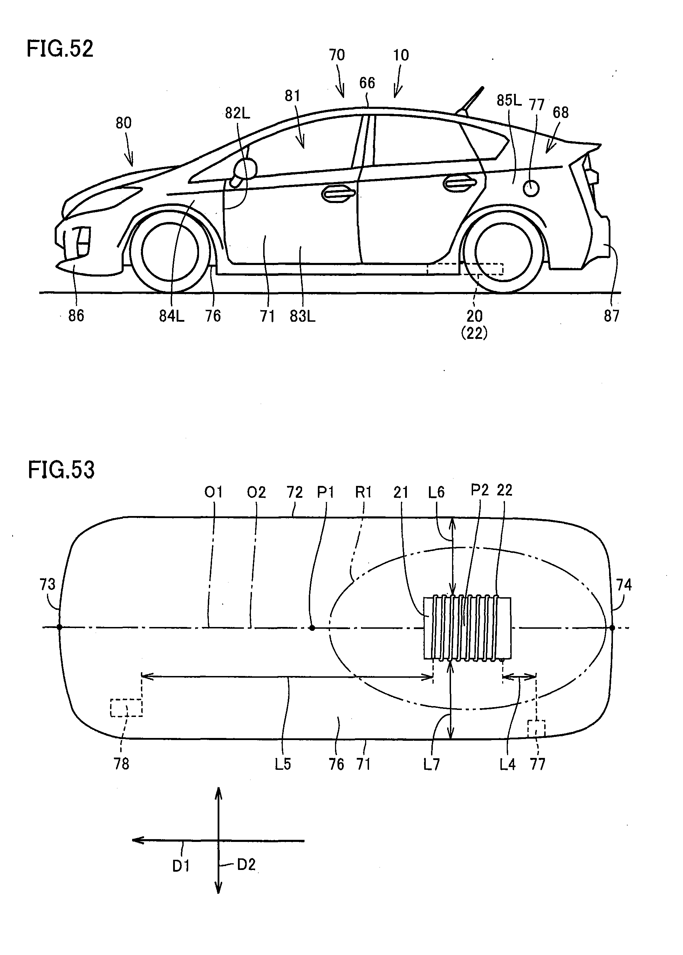

With reference to Figs. 51 to 53, electrically powered vehicle 10 according to the present twelfth embodiment will be hereinafter described. Fig. 51 is a plan view of electrically powered vehicle 10 according to the twelfth embodiment. Fig. 52 is a left side view of electrically powered vehicle 10.

As shown in Fig. 51, charging portion 78 is provided in engine roof 88 of upper surface 75, and disposed at a position close to left side surface 71 relative to the center portion of engine roof 88 in width direction D2.

As shown in Fig. 52, refueling portion 77 is provided in rear fender 85L of left side surface 71.

Fig. 53 is a plan view schematically showing electrically powered vehicle 10 when electrically powered vehicle 10 is viewed in plan from above in the direction vertical to electrically powered vehicle 10.

Distance L5 between second coil 22 and charging portion 78 in traveling direction D1 is longer than each of distance L6 and distance L7. Accordingly, even if the operator or the like comes closer to around charging portion 78 during transfer of electric power, an electromagnetic field having high strength can be suppressed from reaching the electrical device carried by the operator or the like.

In particular, since charging portion 78 is provided in upper surface 75, an electromagnetic field having high strength can be suppressed from reaching charging portion 78.

In the present twelfth embodiment, since refueling portion 77 is provided in left side surface 71 and charging portion 78 is provided at a position in the vicinity of left side surface 71, second coil 22 may be disposed at a position close to right side surface 72 relative to left side surface 71.

(Thirteenth Embodiment)

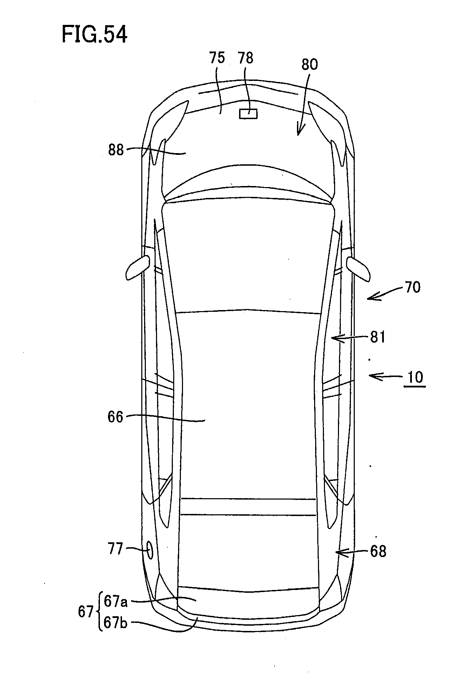

With reference to Figs. 54 to 56, electrically powered vehicle 10 according to the present thirteenth embodiment will be hereinafter described. This Fig. 54 is a plan view of electrically powered vehicle 10 according to the thirteenth embodiment. Fig. 54 is a left side view of electrically powered vehicle 10.

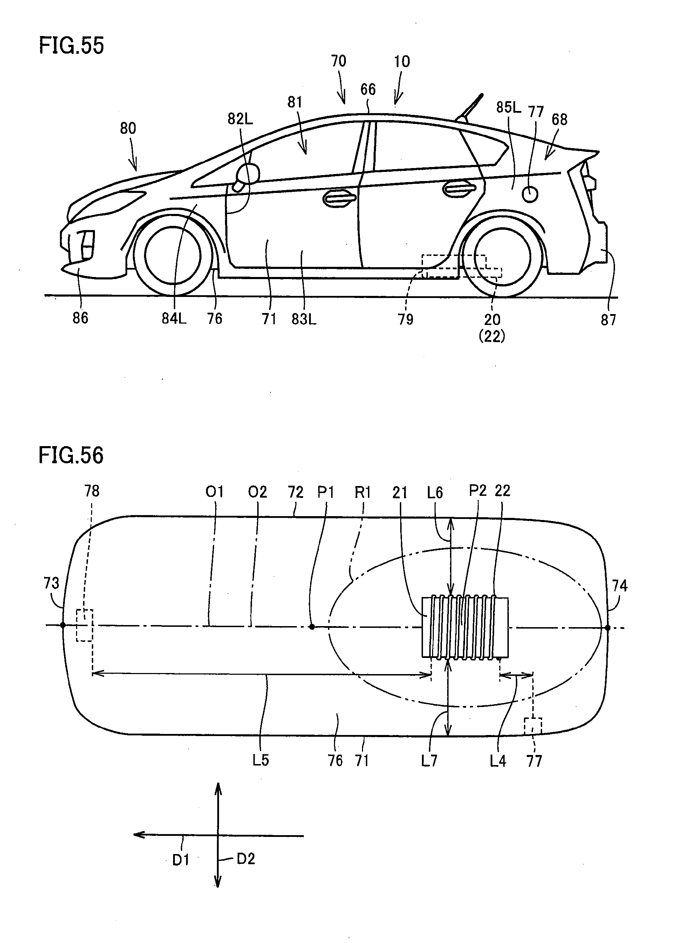

In Fig. 54, charging portion 78 is provided in engine roof 88 of upper surface 75, and located at a position in engine roof 88 that is close to front surface 73 relative to left side surface 71 and right side surface 72. In Fig. 55, refueling portion 77 is provided in rear fender 85L of left side surface 71.

Fig. 56 is a plan view schematically showing electrically powered vehicle 10 when electrically powered vehicle 10 is viewed in plan from above in the direction vertical to electrically powered vehicle 10. In Fig. 56, second coil 22 is disposed at a position in bottom surface 76 that is close to rear surface 74 relative to front surface 73.

Among left side surface 71, right side surface 72, front surface 73, and rear surface 74, front surface 73 is farthest away from second coil 22.

Charging portion 78 is disposed at a position in engine roof 88 that is close to front surface 73. Accordingly, even if the operator or the like comes closer to around charging portion 78 during transfer of electric power, an electromagnetic field having high strength can be suppressed from reaching the electrical device carried by the operator or the like. It is to be noted that distance L5 between charging portion 78 and second coil 22 in traveling direction D1 is longer than each of distance L6 and distance L7.

Since charging portion 78 is provided in upper surface 75 while second coil 22 is provided in bottom surface 76, the electromagnetic field formed around second coil 22 during transfer of electric power is suppressed from reaching charging portion 78.

Distance L4 between second coil 22 and refueling portion 77 in traveling direction D1 is shorter than the shorter one of distance L6 and distance L7. On the other hand, refueling portion 77 is disposed at the rear side in traveling direction D1 relative to the center portion of second coil 22 in traveling direction D1. Accordingly, even if the operator or the like comes closer to around refueling portion 77, an electromagnetic field having high strength can be suppressed from reaching the electrical device carried by the operator or the like.

Refueling portion 77 may be disposed at the front side relative to the center portion of second coil 22 in traveling direction D1, and further, may be disposed such that distance L4 is longer than each of distance L6 and distance L7.

(Thirteenth Embodiment)

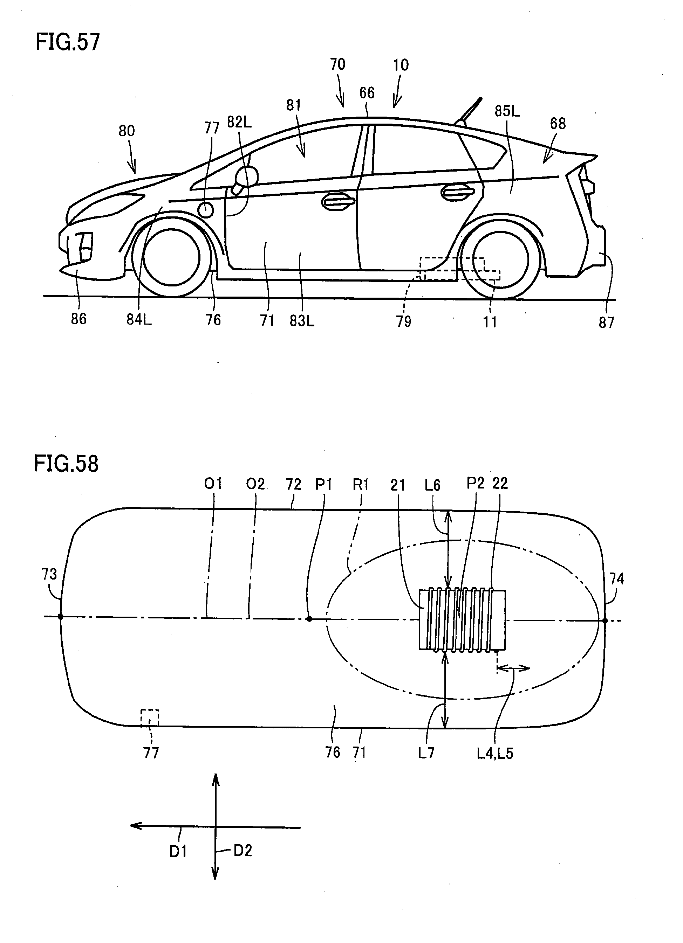

With reference to Figs. 57 and 58, electrically powered vehicle 10 according to the present thirteenth embodiment will be hereinafter described. It is to be noted that those of the configurations shown in Figs. 57 and 58 that are identical or correspond to the configurations shown in Figs. 1 to 56 are designated by the same reference characters, and description thereof may not be repeated. Fig. 57 is a left side view of electrically powered vehicle 10 according to the thirteenth embodiment. Fig. 58 is a plan view schematically showing electrically powered vehicle 10 when electrically powered vehicle 10 is viewed from above in the direction vertical to electrically powered vehicle 10.

As shown in Figs. 57 and 58, electrically powered vehicle 10 includes power reception device 11 and refueling portion 77. Electrically powered vehicle 10 according to the present thirteenth embodiment does not include charging portion 78. As shown in Fig. 58, refueling portion 77 is provided in front fender 84L, and disposed at a position away from winding axis O1.

Accordingly, even if the operator supplies oil during transfer of electric power between power reception unit 20 and power transmission unit 56, an electromagnetic field having high strength can be suppressed from reaching the operator. In particular, since the operator often keeps standing near electrically powered vehicle 10 during the refueling operation, it is preferable that refueling portion 77 is disposed at a position away from winding axis O1.

(Fourteenth Embodiment)

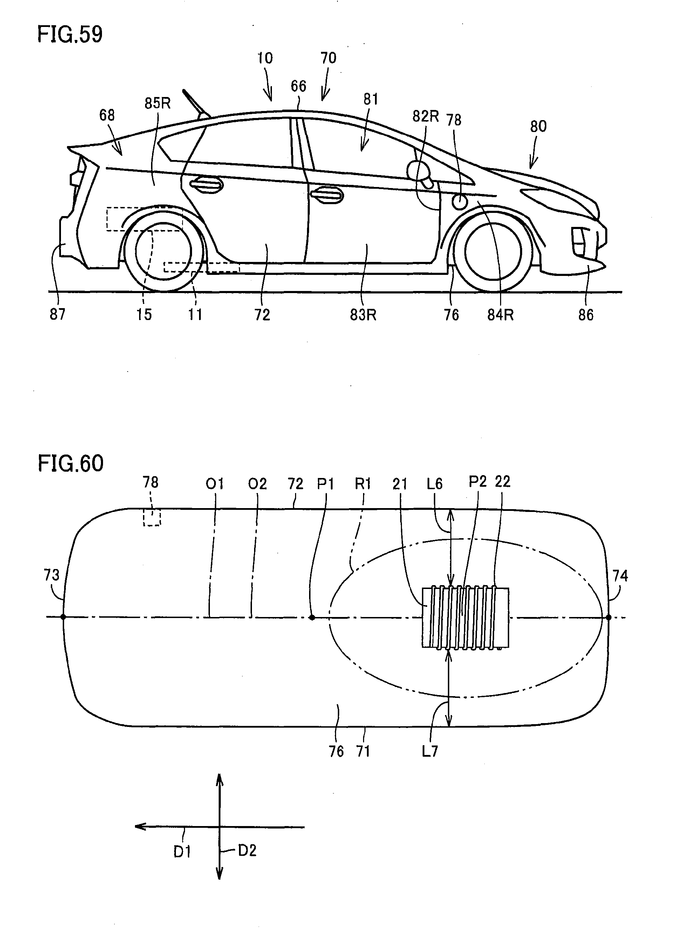

With reference to Figs. 59 and 60, electrically powered vehicle 10 according to the present fourteenth embodiment will be hereinafter described. It is to be noted that those of the configurations shown in Figs. 59 and 60 that are identical or correspond to the configurations shown in Figs. 1 to 58 are designated by the same reference characters, and description thereof may not be repeated.

Fig. 59 is a right side view of electrically powered vehicle 10 according to the fourteenth embodiment. Fig. 60 is a plan view schematically showing electrically powered vehicle 10 when electrically powered vehicle 10 is viewed in plan from above in the direction vertical to electrically powered vehicle 10. Electrically powered vehicle 10 includes power reception device 11 and charging portion 78. It is to be noted that electrically powered vehicle 10 according to the present fourteenth embodiment does not include refueling portion 77. Charging portion 78 is provided in front fender 84R.

Accordingly, charging portion 78 is provided at a position away from winding axis 01. Therefore, even if the operator performs the charging operation using charging portion 78 during transfer of electric power between power reception unit 20 and power transmission unit 56, an electromagnetic field having high strength can be suppressed from reaching the operator.

(Fifteenth Embodiment)

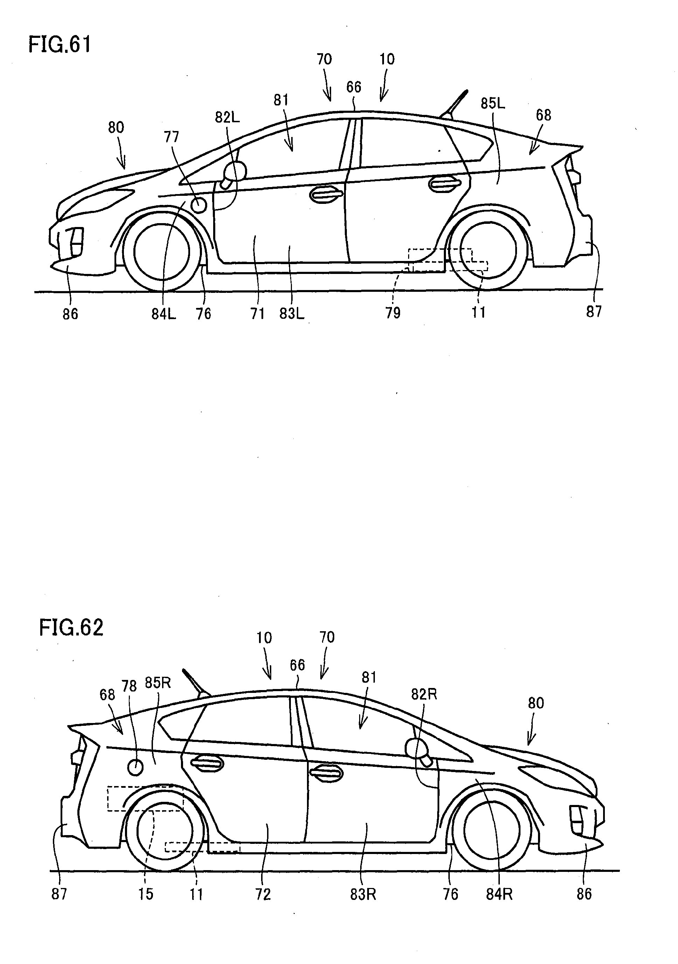

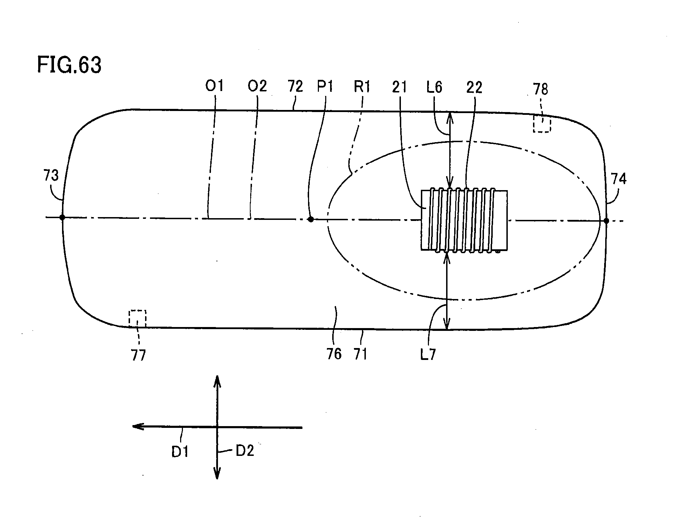

With reference to Figs. 61 to 63, electrically powered vehicle 10 according to the present fifteenth embodiment will be hereinafter described. It is to be noted that those of the configurations shown in Figs. 61 to 63 that are identical or correspond to the configurations shown in Figs. 1 to 60 are designated by the same reference characters, and description thereof may not be repeated. Fig. 61 is a left side view of electrically powered vehicle 10 according to the fifteenth embodiment. Fig. 62 is a right side view of electrically powered vehicle 10. Fig. 63 is a plan view schematically showing electrically powered vehicle 10 when electrically powered vehicle 10 is viewed in plan from above in the direction vertical to electrically powered vehicle 10.

Electrically powered vehicle 10 includes refueling portion 77 provided in front fender 84L of left side surface 71, charging portion 78 provided in rear fender 85R of right side surface 72, and power reception device 11 provided in the bottom surface of electrically powered vehicle 10. As shown in Fig. 63, refueling portion 77 is provided at a position farther away from second coil 22 than charging portion 78. In other words, the distance between refueling portion 77 and second coil 22 is longer than the distance between charging portion 78 and second coil 22.

The time required for the refueling operation is generally shorter than the time required for the charging time. Accordingly, an oil supply operator often keeps standing near electrically powered vehicle 10 during the refueling operation. On the other hand, in the case where charging is carried out using charging portion 78, it often happens that the charging operator inserts a plug into charging portion 78, and then, goes away from the area around electrically powered vehicle 10 while leaving the plug being connected to charging portion 78.

In this case, refueling portion 77 is farther away from second coil 22 than charging portion 78. Accordingly, even if the refueling operation is performed during transfer of electric power between power reception unit 20 and power transmission unit 56, an electromagnetic field having high strength can be suppressed from reaching the oil supply operator.

(Sixteenth Embodiment)

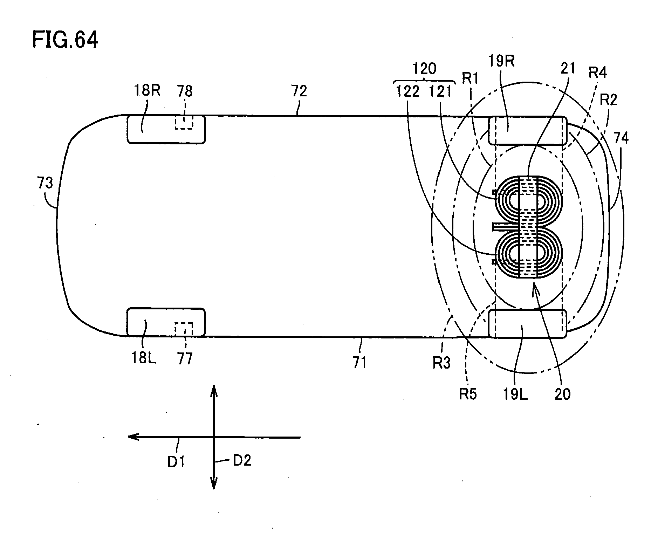

With reference to Figs. 64 to 67, electrically powered vehicle 10 according to the present sixteenth embodiment will be hereinafter described. It is to be noted that those of the configurations shown in Figs. 64 to 67 that are identical or correspond to the configurations shown in Figs. 1 to 63 are designated by the same reference characters, and description thereof may not be repeated.

Fig. 64 is a plan view schematically showing electrically powered vehicle 10 according to the present sixteenth embodiment. As shown in this Fig. 64, power reception unit 20 is disposed between a rear wheel 19R and a rear wheel 19L. Refueling portion 77 is provided in left side surface 71 and also at the front side of electrically powered vehicle 10 relative to power reception unit 20. Charging portion 78 is provided in right side surface 72 and also at the front side of electrically powered vehicle 10 relative to power reception unit 20. It is to be noted that power reception unit 20 is disposed to be close to rear surface 74 relative to the center portion in the front-rear direction of electrically powered vehicle 10, and refueling portion 77 and charging portion 78 are disposed to be close to front surface 73 relative to the center portion in the front-rear direction of electrically powered vehicle 10.

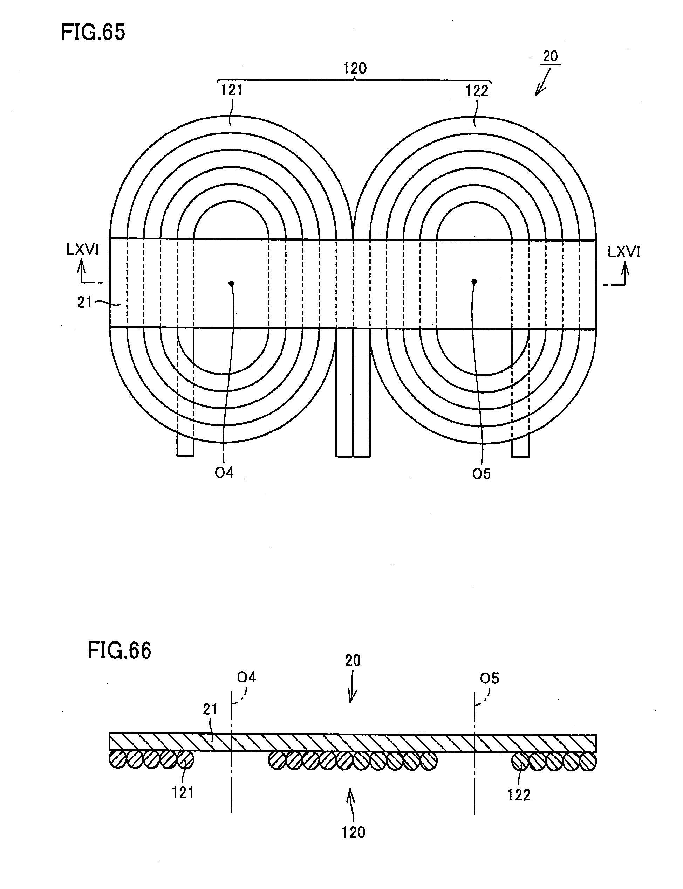

Fig. 65 is a plan view showing power reception unit 20. Fig. 66 is a cross sectional view taken along a LXVI-LXVI line shown in Fig. 29. As shown in Fig. 65 and Fig. 66, power reception unit 20 includes: a ferrite core 21; and a coil unit 120 provided on the lower surface of this ferrite core 21.

Ferrite core 21 is formed to have a rectangular shape, and is disposed to be long in width direction D2 as shown in Fig. 64.

In Fig. 65 and Fig. 66, coil unit 120 includes coils 121 and 122 arranged in the longitudinal direction of ferrite core 21.

Coil 121 is formed by winding a litz wire (coil wire) around winding axis 04 extending in the vertical direction, and the litz wire is wound in a plane extending along the lower surface of ferrite core 21.

Coil 122 is formed by winding a litz wire (coil wire) around winding axis 05 extending in the vertical direction, and the litz wire is wound in an imaginary plane passing through the lower surface of ferrite core 21.

It is to be noted that each of coil 121 and coil 122 is wound to provide a hollow and ferrite core 21 is exposed through the hollow portion of each of coil 121 and coil 122.

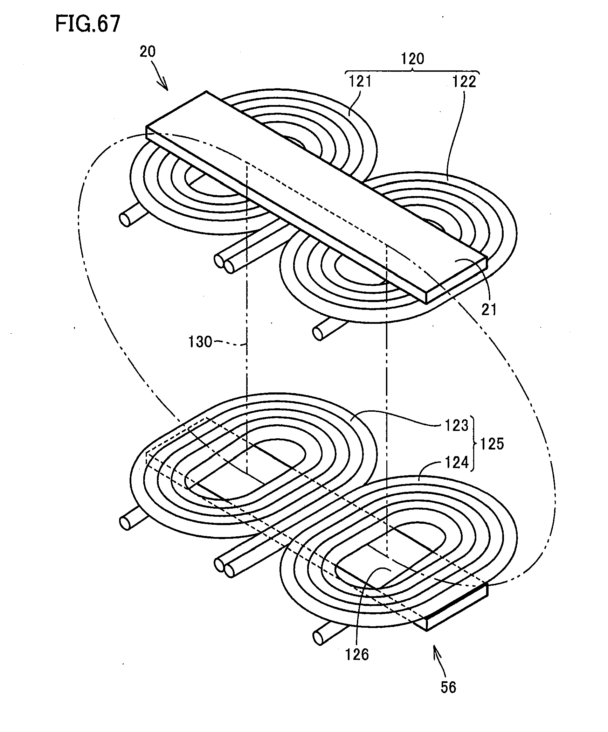

Fig. 67 is a perspective view showing power reception unit 20 and power transmission unit 56. As shown in Fig. 67, power transmission unit 56 is formed in the same manner as power reception unit 20.

Power transmission unit 56 includes: a core ferrite core 126 formed to have a plate-like shape; and a coil unit 125 disposed on the upper surface of this core ferrite core 126.

Core ferrite core 126 is also formed to have a rectangular shape. Coil unit 125 includes coils 123 and 124 arranged in the longitudinal direction of core ferrite core 126.

Coil 123 is formed by winding a litz wire (coil wire) to surround the winding axis, and the litz wire is wound in a plane passing through the upper surface of core ferrite core 126. Coil 124 is formed by winding a litz wire to surround the winding axis, and this litz wire is also wound in a plane passing through the upper surface of core ferrite core 126.

Each of coil 123 and coil 124 is wound to provide a hollow and core ferrite core 126 is exposed through the hollow portion of each of coil 123 and coil 124.

When electric power is transferred between power reception unit 20 and power transmission unit 56 thus formed, a magnetic path is formed between power reception unit 20 and power transmission unit 56.

Magnetic path 130 passes through the hollow portion of coil 123, the air gap, the hollow portion of coil 121, the portion of ferrite core 21 exposed through the hollow portion of coil 121, and the portion of ferrite core 21 between coil 121 and coil 122. Further, magnetic path 130 passes through the portion of ferrite core 21 exposed through the hollow portion of coil 122, the hollow portion of coil 122, the air gap, and the hollow portion of coil 124. Further, magnetic path 130 passes through the portion of ferrite core 126 exposed through the hollow portion of coil 124, the portion of ferrite core 126 between coil 123 and coil 124, and the portion of ferrite core 126 exposed through the hollow portion of coil 123.

With magnetic path 130 being thus formed between power reception unit 20 and power transmission unit 56, power transfer efficiency is improved between power reception unit 20 and power transmission unit 56.

In Fig. 67, for example, when the magnetic flux flows from the hollow portion of coil 122 toward the hollow portion of coil 121, a part of the magnetic flux may not flow toward the hollow portion of coil 121, but may be emitted from the end of ferrite core 21 to the outside, and then, may pass through an air gap and reach the end of ferrite core 126.

Similarly, when the magnetic flux flows from the hollow portion of coil 121 toward the hollow portion of coil 122, a part of the magnetic flux does not enter into the hollow portion of coil 122, but is emitted from the end of ferrite core 21 toward the outside, and then, reaches the end of ferrite core 126.

Consequently, when electric power is transferred between power reception unit 20 and power transmission unit 56, a first strength region R1, a second strength region R2 and a third strength region R3 are distributed wider in the direction in which coil 121 and coil 122 are arranged than in the direction perpendicular to the direction in which coil 121 and coil 122 are arranged, as shown in Fig. 64.

In this case, coil 121 and coil 122 are arranged in width direction D2 as shown in Fig. 64. Accordingly, first strength region R1, second strength region R2 and third strength region R3 are distributed wider in width direction D2 than in traveling direction D1.

In this way, in the present embodiment, when power reception unit 20 contactlessly receives electric power from power transmission unit 56, the electromagnetic field formed around power reception unit 20 is distributed wider in the direction in which ferrite core 21 longitudinally extends (the second direction) than in the width direction of ferrite core 21 (the first direction). In this case, the region extending from coil 121 in the width direction of ferrite core 21 is defined as a region R4, while the region extending from coil 122 in the width direction of ferrite core 21 is defined as a region R5. Refueling portion 77 and charging portion 78 each are provided at a position away from regions R4 and R5. Accordingly, an electromagnetic field having high strength can be suppressed from reaching refueling portion 77 and charging portion 78.

In other words, power reception unit 20 is mounted in electrically powered vehicle 10 such that the longitudinal direction of ferrite core 21 extends in the width direction of electrically powered vehicle 10, and refueling portion 77 and charging portion 78 are arranged to be displaced from power reception unit 20 in the front-rear direction of electrically powered vehicle 10. Accordingly, an electromagnetic field having high strength formed around power reception unit 20 can be suppressed from reaching refueling portion 77 and charging portion 78.

(Seventeenth Embodiment)

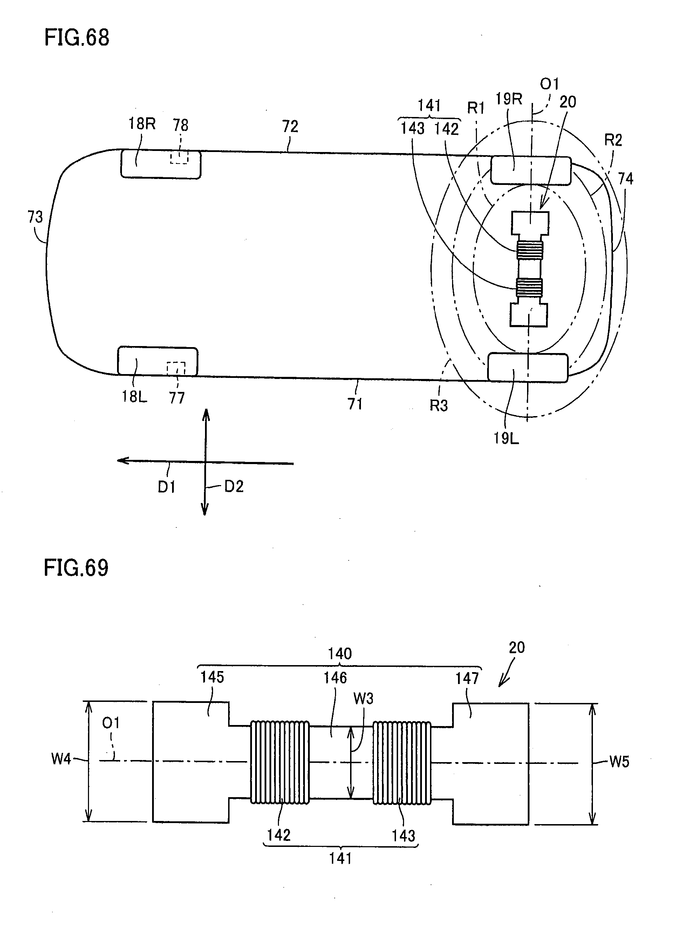

With reference to Figs. 68 to 74, electrically powered vehicle 10 according to the present fourth embodiment will be hereinafter described. It is to be noted that those of the configurations shown in Figs. 68 to 74 that are identical or correspond to the configurations shown in Figs. 1 to 67 are designated by the same reference characters, and description thereof may not be repeated.

Fig. 68 is a plan view schematically showing electrically powered vehicle 10 according to the present seventeenth embodiment. Fig. 69 is a plan view schematically showing power reception unit 20. As shown in this Fig. 69, power reception unit 20 includes: a ferrite core 140; and a coil unit 141 wound around ferrite core 140.

Ferrite core 140 includes: a stem portion 146; a wide portion 145 formed at one end portion of stem portion 146; and a wide portion 147 provided at the other end portion of stem portion 146. Ferrite core 140 is formed to have a plate-like shape. Width W4 of wide portion 145 and width W5 of wide portion 147 are larger than width W3 of stem portion 146.

Coil unit 141 includes coils 142 and 143 wound around stem portion 146. Coil 142 and coil 143 each are formed to surround winding axis O1. Coil 142 and coil 143 are provided with a space interposed therebetween in the direction in which winding axis O1 extends. Coils 142 and 143 are provided with a space interposed therebetween in the longitudinal direction of stem portion 146.

Here, currents can be supplied to coil 142 and coil 143, respectively. Accordingly, the direction in which the current flows through coil 142 and the direction in which the current flows through coil 143 can be separately controlled.

It is to be noted that power reception unit 20 according to the present embodiment can receive electric power not only from the same type of power transmission unit 56 but also from a different type of power transmission unit 56.

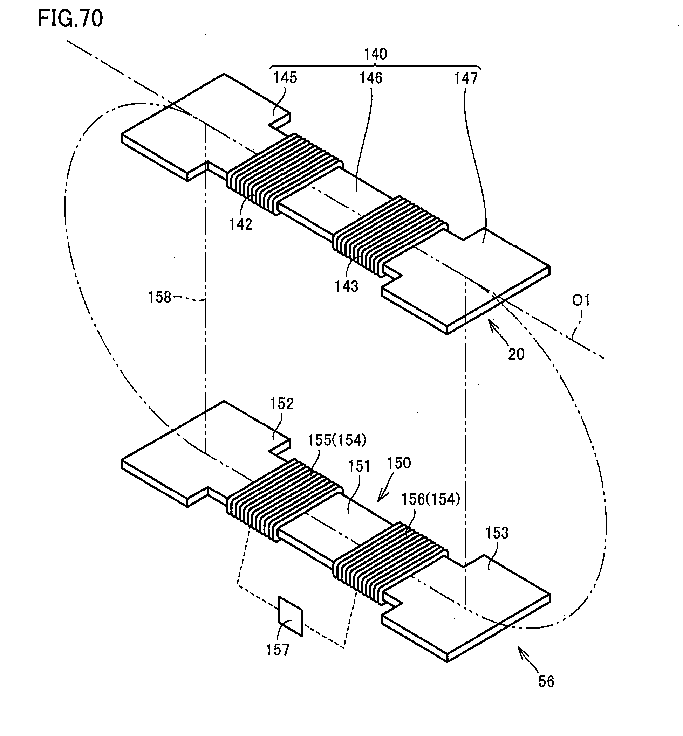

Now, with reference to Fig. 70, the following first describes a case where electric power is received from the same type of power transmission unit 56 as power reception unit 20.

Fig. 70 is a perspective view schematically showing power reception unit 20 and power transmission unit 56. As shown in Fig. 70, power transmission unit 56 includes: a ferrite core 150; a coil unit 154 provided on ferrite core 150; and a control unit 157.

Ferrite core 150 includes: a stem portion 151; a wide portion 152 provided at one end portion of stem portion 151; and a wide portion 153 provided at the other end portion of stem portion 151. It is to be noted that the widths of wide portion 152 and wide portion 153 are larger than the width of stem portion 151.

Coil unit 154 includes: a coil 155 provided on stem portion 151; and a coil 156 provided on stem portion 151 with a space interposed between coil 156 and coil 155.

Here, the direction in which the current flows through coil 155 and the direction in which the current flows through coil 156 can be separately controlled.

Control unit 157 can switch (control) the distribution direction of the current flowing through coil 155 and also can switch (control) the distribution direction of the current flowing through coil 156.

The following describes transfer of electric power between power reception unit 20 and power transmission unit 56 thus formed. Here, in Fig. 70, currents are caused to flow through coil 155 and coil 156 in the same direction. Accordingly, a magnetic path 158 is formed. Magnetic path 158 passes through wide portion 152, the inside of coil 155, stem portion 151, the inside of coil 156, wide portion 153, the air gap, wide portion 147, coil 143, stem portion 146, coil 142, wide portion 145, and the air gap. Accordingly, currents flow through coil 142 and coil 143. In this way, power reception unit 20 can receive electric power from the same type of power transmission unit 56 as power reception unit 20.

In this case, the magnetic flux flowing between wide portion 145 and wide portion 152 spreads to some extent. Similarly, the magnetic flux flowing between wide portion 147 and wide portion 153 also spreads to some extent. Accordingly, during transfer of electric power, the electromagnetic field is distributed widely in the direction in which winding axis O1 extends.

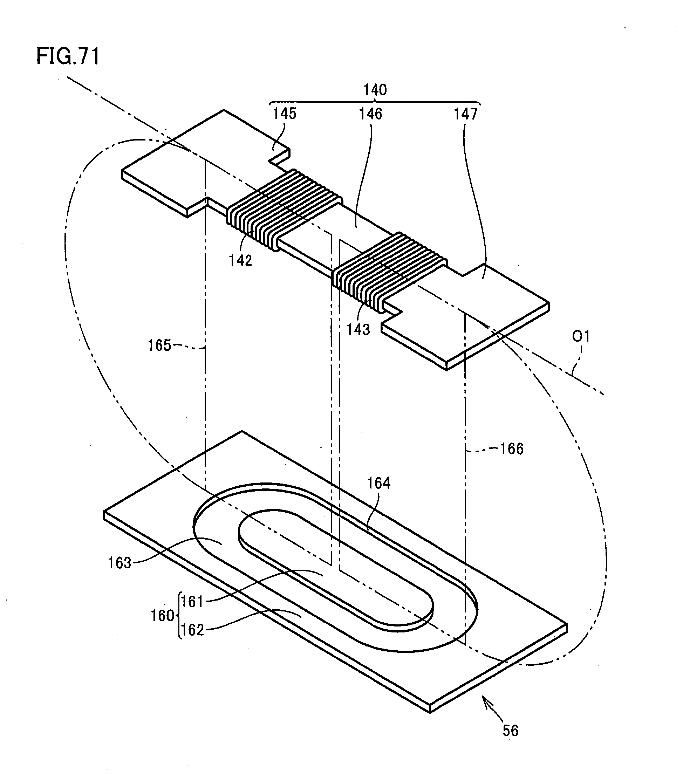

With reference to Fig. 71, the following describes a mechanism in which power reception unit 20 receives electric power from power transmission unit 56 of a type different from power reception unit 20.

In Fig. 71, power transmission unit 56 includes a ferrite core 160 and a coil 163 provided in ferrite core 160.

Ferrite core 160 includes: a base portion 162 having a plate-like shape and having a groove portion 164 formed at its central portion; and a stem portion 161 formed in groove portion 164. Coil 163 is disposed in groove portion 164 to surround stem portion 161.

The following describes a mechanism of transferring electric power between power reception unit 20 and power transmission unit 56 thus formed.

Here, when current flows through coil 163, magnetic path 165 and magnetic path 166 are formed. Magnetic path 165 passes through, for example, stem portion 161, the air gap, stem portion 146, the inside of coil 142, wide portion 145, the air gap, and base portion 162.

Magnetic path 166 passes through stem portion 161, the air gap, stem portion 146, the inside of coil 143, wide portion 147, the air gap, and base portion 162.

Then, currents flow into coil 142 and coil 143. On this occasion, the direction in which the current flow through coil 143 is opposite to the direction in which the current flows through coil 142. In this way, power reception unit 20 receives electric power from power transmission unit 56.

Here, when power reception unit 20 described above receives electric power, an electromagnetic field having high strength is widely distributed in the direction in which winding axis O1 of each of coil 142 and coil 143 extends.

In this way, the electromagnetic field having high strength is widely distributed in the direction in which winding axis O1 extends, in each of the cases where electric power is transferred between power reception unit 20 and power transmission unit 56 of the same type as power reception unit 20, and where electric power is transferred between power reception unit 20 and power transmission unit 56 of a type different from power reception unit 20.

In Fig. 68, coil unit 141 is disposed such that winding axis O1 extends in width direction D2. Consequently, first strength region R1, second strength region R2 and third strength region R3 are distributed wider in width direction D2 than in traveling direction D1. In this case, refueling portion 77 and charging portion 78 are provided at a position away from winding axis O1. Accordingly, when power reception unit 20 contactlessly receives electric power from power transmission unit 56, an electromagnetic field having high strength is suppressed from reaching refueling portion 77 and charging portion 78.

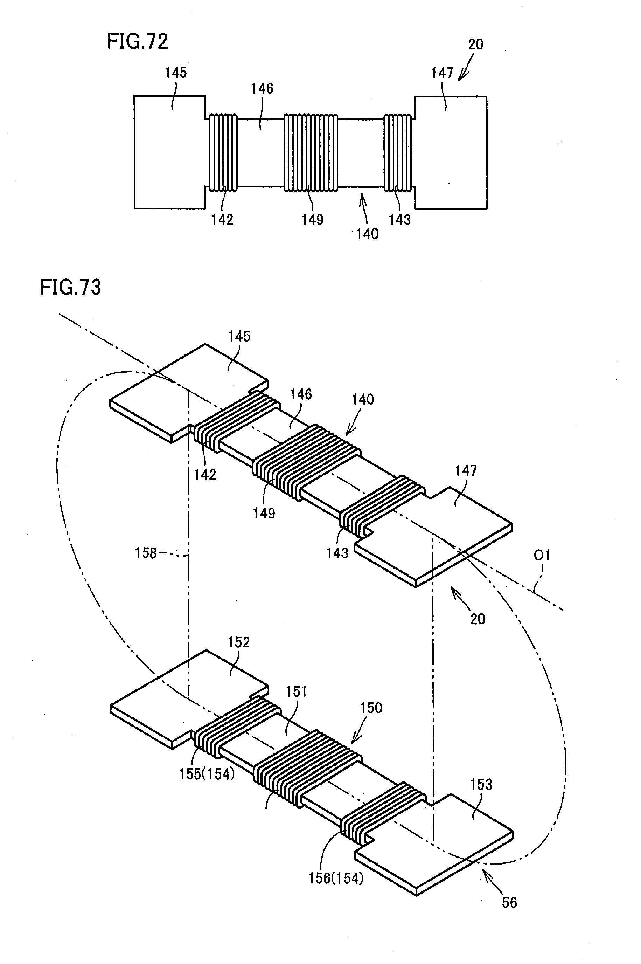

It is to be noted that Fig. 72 is a plan view showing a modification of power reception unit 20. As shown in Fig. 72, power reception unit 20 further includes a middle coil 149 provided between coil 142 and coil 143. Also in the example shown in Fig. 72, electric power can be received from various types of power transmission units 56. It is to be noted that Fig. 73 is a perspective view showing that electric power is being transferred between power reception unit 20 shown in Fig. 71 and power transmission unit 56 of the same type as this power reception unit 20. As shown in this Fig. 73, the electromagnetic field is widely distributed in the direction in which winding axis O1 extends.

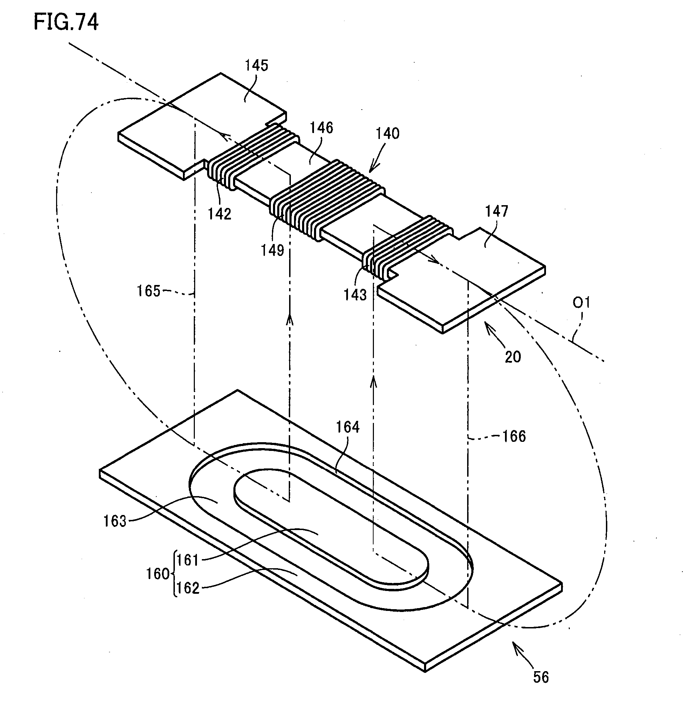

Fig. 74 is a perspective view showing that electric power is being transferred between power reception unit 20 shown in Fig. 74 and power transmission unit 56 of a type different from this power reception unit 20. Also in the example shown in this Fig. 74, the electromagnetic field during transfer of electric power is widely distributed in the direction in which winding axis O1 extends.

Thus, power reception unit 20 shown in Fig. 72 also can receive electric power from various types of power transmission units 56. In this way, first strength region R1, second strength region R2 and third strength region R3 are widely distributed in the direction in which winding axis O1 extends, in each of the cases where electric power is transferred between power reception unit 20 and power transmission unit 56 of the same type as power reception unit 20, and also where electric power is transferred between power reception unit 20 and power transmission unit 56 of a type different from power reception unit 20.

As shown in Fig. 68, power reception unit 20 is disposed such that winding axis O1 corresponds to width direction D2, and refueling portion 77 and charging portion 78 are arranged to be displaced from power reception unit 20 in the front-rear direction of electrically powered vehicle 10. When power reception unit 20 contactlessly receives electric power from power transmission unit 56, the electromagnetic field formed around power reception unit 20 is widely distributed in the width direction of electrically powered vehicle 10. On the other hand, refueling portion 77 and charging portion 78 are arranged to be displaced from electrically powered vehicle 10 in the front-rear direction of the vehicle. In this way, since refueling portion 77 and charging portion 78 are arranged at a position away from winding axis O1 of power reception unit 20, an electromagnetic field having high strength can be suppressed from reaching refueling portion 77 and charging portion 78.

(Eighteenth Embodiment)

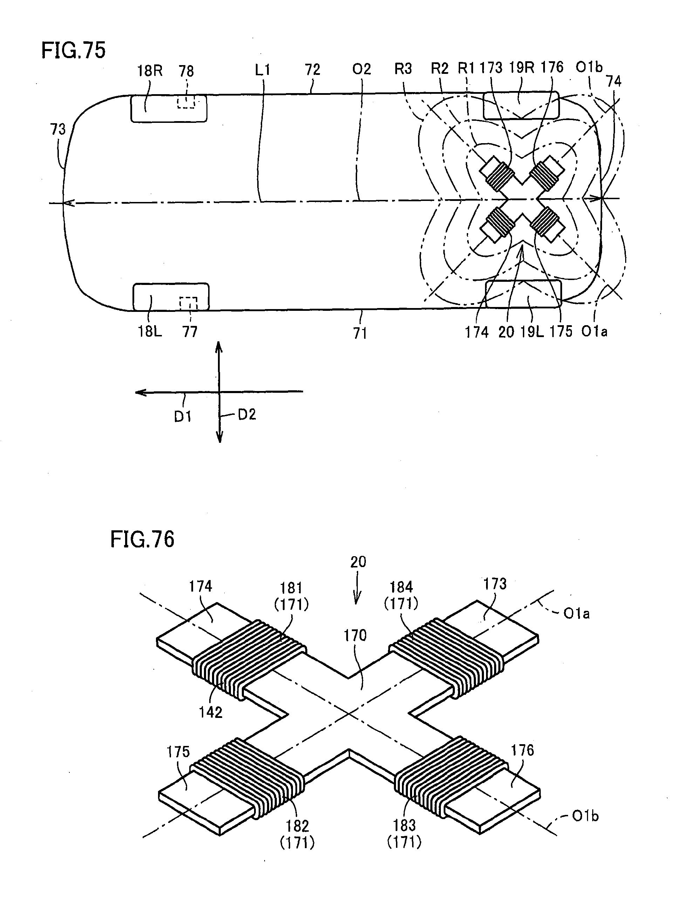

With reference to Fig. 75 to Fig. 79, the following describes an electrically powered vehicle 10 according to the eighteenth embodiment. It is to be noted that those of the configurations shown in Fig. 75 to Fig. 79 that are identical or correspond to the configurations shown in Fig. 1 to Fig. 74 are designated by the same reference characters, and description thereof may not be repeated.

Fig. 75 is a plan view schematically showing electrically powered vehicle 10 according to the twenty-seventh embodiment. As shown in this Fig. 75, power reception unit 20 is disposed between rear wheel 19L and rear wheel 19R. Refueling portion 77 is provided in a portion of left side surface 71 that is located above front wheel 18L. Charging portion 78 is provided in a portion of right side surface 72 that is located above front wheel 18R.

As shown in Fig. 76, power reception unit 20 includes: a ferrite core 170; and a coil unit 171 provided on ferrite core 170.

Ferrite core 170 includes a plurality of core pieces 173, 174, 175, and 176. Core pieces 173, 174, 175, and 176 each have one end connected to one another.

Coil unit 171 includes: a coil 184 wound around core piece 173; a coil 181 wound around core piece 174; a coil 182 wound around core piece 175; and a coil 183 wound around core piece 176. Accordingly, ferrite core 170 has a shape of cross. It is to be noted that ferrite core 170 is formed to have a plate-like shape.

Coil 181 and coil 183 are formed to surround a winding axis O1b, and disposed at a distance from each other in the direction in which winding axis O1b extends.

Coil 182 and coil 184 are formed to surround winding axis O1a, and disposed at a distance from each other in the direction in which winding axis O1a extends.

Fig. 75 shows winding axis O1a, winding axis O1b and bottom surface 76 that are viewed in plan from above electrically powered vehicle 10. In this case, refueling portion 77 is provided at a position away from each of winding axis O1a and winding axis O1b. Furthermore, charging portion 78 is also provided at a position away from each of winding axis O1a and winding axis O1b.

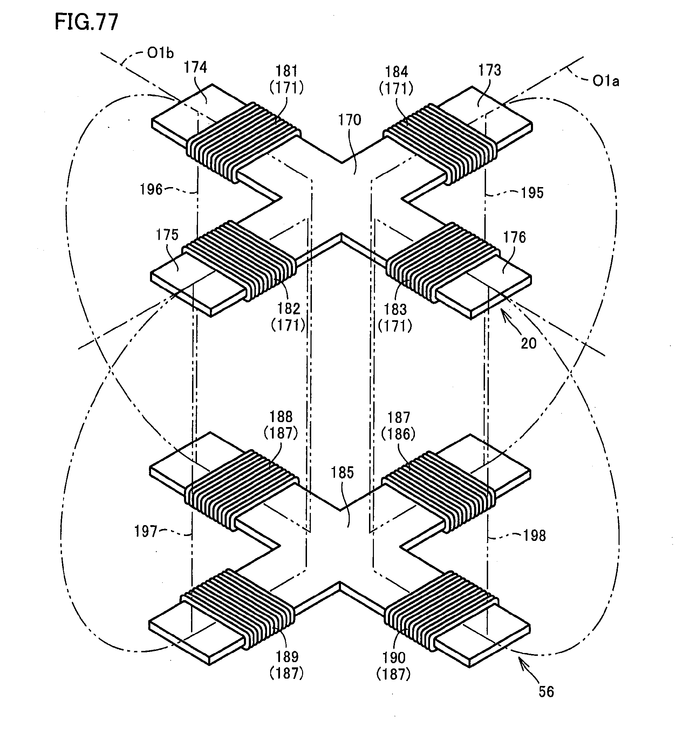

Power reception unit 20 thus formed can also cope with various types of power transmission units. Fig. 77 is a perspective view showing that electric power is being transferred between power reception unit 20 shown in Fig. 76 and power reception unit 20 of the same type as this power reception unit 20. As shown in Fig. 77, power transmission unit 56 includes: a ferrite core 185 having a shape of cross; and a coil unit 186 provided on this ferrite core 185.

Ferrite core 185 includes a plurality of core piece portions. Coil unit 186 includes coils 187, 188, 189, and 190 respectively wound around the core pieces.

When transferring electric power between power transmission unit 56 and power reception unit 20 thus formed, currents flows through coils 187, 188, 189, and 190 of power transmission unit 56. Accordingly, for example, in the example shown in Fig. 77, a magnetic path 195 is formed between coil 184 and coil 187. A magnetic path 196 is formed between coil 181 and coil 188. A magnetic path 197 is formed between coil 182 and coil 189. A magnetic path 198 is formed between coil 183 and coil 190.

Thus, the plurality of magnetic paths are formed between power reception unit 20 and power transmission unit 56, whereby power reception unit 20 receives electric power from power transmission unit 56. In this way, during transfer of electric power between power reception unit 20 and power transmission unit 56, the magnetic flux expands between core piece 173 and ferrite core 185 in the direction in which winding axis O1a extends. The magnetic flux expands between core piece 175 and ferrite core 185 in the direction in which winding axis O1a extends. Furthermore, between core piece 174 and ferrite core 185, and between core piece 176 and ferrite core 185, the magnetic flux expands in the direction in which winding axis O1b extends.

Consequently, as shown in Fig. 75, first strength region R1, second strength region R2 and third strength region R3 each are widely distributed in the direction in which winding axis O1a and winding axis O1b extend.

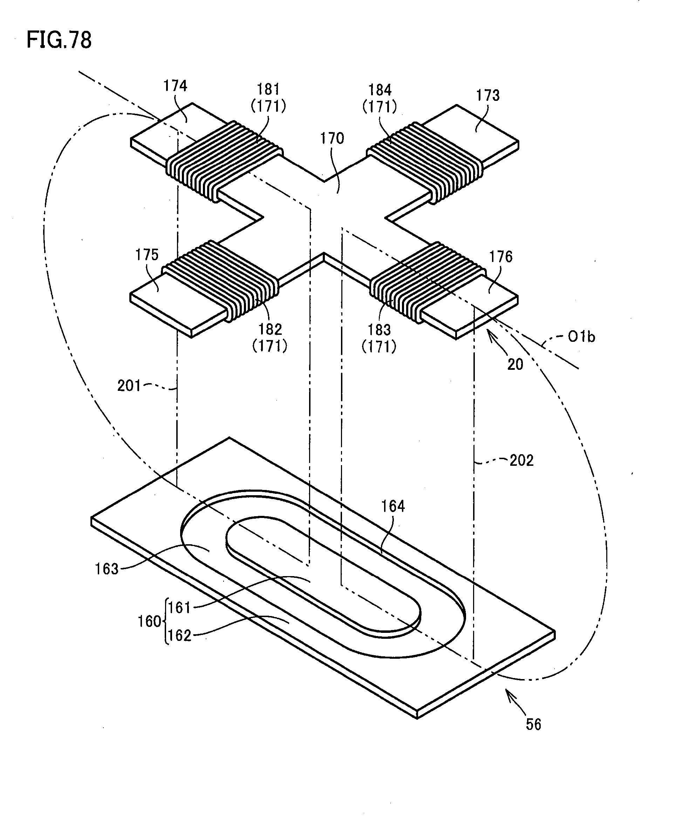

In this case, refueling portion 77 and charging portion 78 each are provided at a position away from winding axis O1a and winding axis O1b. Accordingly, when power reception unit 20 contactlessly receives electric power from power transmission unit 56, an electromagnetic field formed around power reception unit 20 can be suppressed from reaching refueling portion 77 and charging portion 78. Then, referring to Fig. 78, the following describes transfer of electric power between power reception unit 20 and power transmission unit 56 of a type different from this power reception unit 20.

Fig. 78 is a perspective view showing the transfer of electric power between power reception unit 20 and power transmission unit 56. In Fig. 78, power transmission unit 56 includes a ferrite core 160 and a coil 163.

Base portion 162 is formed to have a plate-like shape and includes: a groove portion 164; and a stem portion 161 formed to project upwardly from the central portion of groove portion 164. Coil 163 is wound around stem portion 161.

When transferring electric power between power transmission unit 56 and power reception unit 20 thus formed, current flows through coil 163 of power transmission unit 56.

Accordingly, magnetic paths 201, 202 are formed between power reception unit 20 and power transmission unit 56. For example, magnetic path 202 passes through stem portion 161, the air gap, the central portion of ferrite core 170, the inside of coil 181, the end portion of core piece 174, the air gap, and ferrite core 160. Magnetic path 202 passes through stem portion 161, the air gap, the central portion of ferrite core 170, the inside of coil 183, core piece 176, the air gap, and ferrite core 160.

With the magnetic paths thus formed between power reception unit 20 and power transmission unit 56, large currents flow through coil 181 and coil 183. Accordingly, power reception unit 20 receives electric power from power transmission unit 56.

In this case, between core piece 174 and ferrite core 160, the magnetic flux is distributed widely in the direction in which winding axis O1b extends. Similarly, also between core piece 176 and ferrite core 160, the magnetic flux is distributed widely in the direction in which winding axis O1b extends.

Thus, according to power reception unit 20 provided in electrically powered vehicle 10 according to the present embodiment, electric power can be received from various types of power transmission units 56.

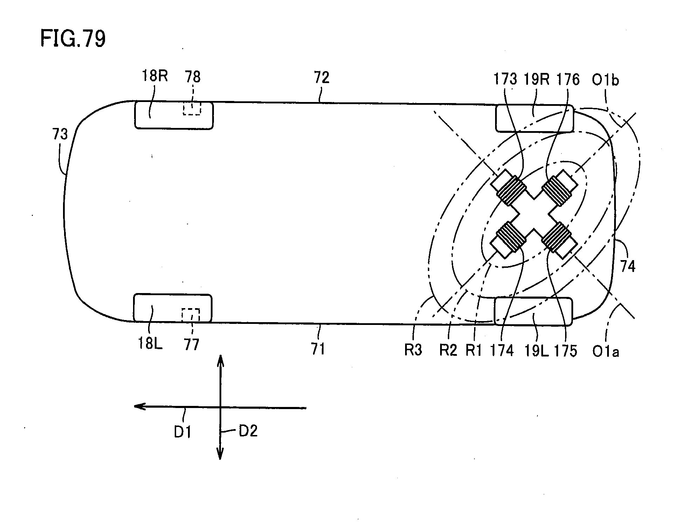

As shown in Fig. 79, first strength region R1, second strength region R2 and third strength region R3 are distributed widely in the direction in which winding axis O1b extends. As shown in Fig. 79, refueling portion 77 and charging portion 78 each are provided at a position away from winding axis O1b. When power reception unit 20 contactlessly receives electric power from power transmission unit 56, an electromagnetic field having high strength can be suppressed from reaching refueling portion 77 and charging portion 78.

In the above-described embodiments, it has been illustrated that the so-called electromagnetic field resonance coupling or the like is employed, but the present invention can be also applied to a so-called electromagnetic induction type contactless charging method. It is to be noted that the electric power received by secondary coil 22 of power reception unit 20 may be extracted by an electromagnetic induction coil and the capacitor and the rectifier may be connected to each other as in the present embodiment. It is to be noted that also in power transmission unit 56, the electric power from power supply 53 may be supplied to primary coil 58 using an electromagnetic induction coil, and high-frequency power driver 54 and primary coil 58 may be connected to each other via an interconnection.

The embodiments disclosed herein are illustrative and non-restrictive in any respect. The scope of the present invention is defined by the terms of the claims, and is intended to include any modifications within the meaning and scope equivalent to the terms of the claims. Further, the above-described numerical values and the like are exemplary and the present invention is not limited to the numerical values and ranges.

INDUSTRIAL APPLICABILITY

The present invention can be applied to a vehicle capable of contactlessly receiving electric power.

REFERENCE SIGNS LIST

10: electrically powered vehicle; 11, 91: power reception device; 13: rectifier; 14: converter; 15: battery; 16: power control unit; 17: motor unit; 20, 96: power reception unit; 21, 57: ferrite core; 22, 58, 92, 94, 97, 99: coil; 23, 59, 95, 98: capacitor; 24, 60: case; 25, 62: shield; 25a: top plate portion; 25b: circumferential wall portion; 25c to 25f: wall portion; 26: cover portion; 27, 61: fixation member; 28: bolt; 29a, 29b, 64a, 64b: protrusion portion; 30, 31: insulation piece; 35: first end portion; 36: second end portion; 37: upper surface; 38: bottom surface; 39, 40: side surface; 41, 42: end surface; 43, 45: long side portion; 44, 46: short side portion; 50, 90: power transmission device; 51: external power feeding device; 52: parking space; 53: AC power supply; 54: high-frequency power driver; 55: control unit; 56, 93: power transmission unit; 63: cover member; 65 magnetic path.

## Claims

1. A vehicle comprising:

   a connection portion to which a supply unit that supplies energy is connected; and
   a power reception unit (20) that includes a coil and receives electric power contactlessly from a power transmission unit provided externally,
   said coil (22) being formed to surround a winding axis extending in a horizontal direction,
   said connection portion being provided at a position away from said winding axis.

2. The vehicle according to claim 1, wherein said connection portion and said winding axis do not overlap with each other.

3. The vehicle according to claim 1, wherein
   said vehicle has a circumferential surface and an upper surface, the circumferential surface including a plurality of surfaces,
   said circumferential surface includes a first surface (72), a second surface (71) facing said first surface (72), a third surface (73) disposed between said first surface (72) and said second surface (71), and a fourth surface (74) disposed between said first surface (72) and said second surface (71) and facing said third surface (73),
   said coil (22) is disposed such that said winding axis (O1) passes through said third surface (73) and said fourth surface (74), and
   said connection portion is provided in one of said first surface (72), said second surface (71) and said upper surface.

4. The vehicle according to claim 1, wherein
   said vehicle has a circumferential surface including a plurality of surfaces, and an upper surface,
   said circumferential surface includes a front surface, a rear surface, a first side surface, and a second side surface,
   said coil (22) is disposed such that said winding axis (O1) passes through said front surface and said rear surface, and
   said connection portion is provided in said first side surface or said second side surface.

5. The vehicle according to claim 1, wherein said connection portion is provided at a position away from said winding axis (O1) and at a position away from said coil.

6. The vehicle according to claim 5, wherein
   said vehicle has a circumferential surface including a plurality of surfaces,
   said circumferential surface includes a first surface (72), a second surface (71) facing said first surface (72), a third surface (73) disposed between said first surface (72) and said second surface (71), and a fourth surface (74) disposed between said first surface (72) and said second surface (71) and facing said third surface (73), and
   said connection portion is provided in one of said first surface (72), said second surface (71), said third surface (73), and said fourth surface (74) that is farthest away from a center of said coil.

7. The vehicle according to claim 5, wherein
   said vehicle has a circumferential surface and an upper surface, the circumferential surface including a plurality of surfaces,
   said circumferential surface includes a front surface, a rear surface, a first side surface, and a second side surface,
   said coil has a center located at a position close to said rear surface relative to said front surface, and
   said connection portion is provided in said first side surface or said second side surface, and disposed at a position close to said front surface relative to said rear surface.

8. The vehicle according to claim 7, wherein
   said vehicle includes a passenger compartment capable of housing a passenger, a boarding opening communicating with said passenger compartment, and a door that opens/closes said boarding opening, and
   said connection portion is provided at a front side relative to said door.

9. The vehicle according to claim 1, wherein
said vehicle further includes a battery, and
said battery is provided to overlap with said winding axis.

10. The vehicle according to claim 9, wherein
said battery is longer in a direction in which said winding axis extends than in a direction perpendicular to said winding axis.

11. The vehicle according to claim 10, wherein
said battery includes a plurality of battery cells, and
said battery cells are arranged in a direction in which said winding axis extends.

12. The vehicle according to claim 1, wherein
said vehicle has a circumferential surface and an upper surface, the circumferential surface including a plurality of surfaces,
said circumferential surface includes a first surface (72), a second surface (71) facing said first surface (72), a third surface (73) disposed between said first surface (72) and said second surface (71), and a fourth surface (74) disposed between said first surface (72) and said second surface (71) and facing said third surface (73),
said coil is disposed such that said winding axis passes through said third surface and said fourth surface, and
said connection portion is provided in said upper surface and disposed near said first surface or said second surface.

13. The vehicle according to claim 1, wherein
said vehicle has a circumferential surface and an upper surface, the circumferential surface including a plurality of surfaces,
said circumferential surface includes a first surface (72), a second surface (71) facing said first surface (72), a third surface (73) disposed between said first surface (72) and said second surface (71), and a fourth surface (74) disposed between said first surface (72) and said second surface (71) and facing said third surface (73),
said connection portion is provided in said upper surface, and
assuming that one of said first surface (72), said second surface (71), said third surface (73), and said fourth surface (74) that is farthest away from a center of said coil is defined as a farthest surface, said connection portion is provided at a position in said upper surface near said farthest surface.

14. The vehicle according to claim 1, wherein
said connection portion includes a charging portion to which a power supply plug that supplies electric power is connected; and an energy supply unit to which a supply plug that supplies energy different from electric power is connected, and
said energy supply unit is provided at a position farther away from said coil than said charging portion.

15. The vehicle according to claim 1, wherein
said connection portion includes a charging portion to which a power supply plug that supplies electric power is connected; and an energy supply unit to which a supply plug that supplies energy different from electric power is connected, and
said charging portion is provided at a position farther away from said coil than said energy supply unit.

16. The vehicle according to claim 1, wherein said power reception unit is provided at a bottom surface of the vehicle.

17. The vehicle according to claim 1, wherein a difference between a natural frequency of said power transmission unit and a natural frequency of said power reception unit (20) is 10% or less of the natural frequency of said power reception unit (20).

18. The vehicle according to claim 1, wherein a coupling coefficient between said power reception unit (20) and said power transmission unit is 0.1 or less.

19. The vehicle according to claim 1, wherein
said power reception unit (20) receives electric power from said power transmission unit through at least one of a magnetic field and an electric field, said magnetic field being formed between said power reception unit (20) and said power transmission unit and oscillating at a specific frequency, said electric field being formed between said power reception unit (20) and said power transmission unit and oscillating at the specific frequency.

**20.** The vehicle according to claim 1, wherein
said winding axis includes a first winding axis and a second winding axis that intersects said first winding axis,
said coil includes a first coil formed to surround said first winding axis, and a second coil formed to surround said second winding axis, and
said connection portion is provided at a position away from said first winding axis and said second winding axis.

**21.** A vehicle comprising:

a connection portion to which a supply unit that supplies energy is connected; and
a power reception unit (20) that includes a coil and receives electric power contactlessly from a power transmission unit provided externally,
an electromagnetic field being distributed to be wider in a second direction intersecting a first direction than in said first direction, said electromagnetic field being formed around said power reception unit when said power reception unit receives electric power contactlessly from said power transmission unit,
said connection portion being provided at a position away from a region that extends from said coil in said second direction.

FIG.1

FIG.2

FIG.3

FIG.4

FIG.5

FIG.6

FIG.7

FIG.8

FIG.9

FIG.10

30(27)

21

31(27)

FIG.11

FIG.12

FIG.13

FIG.14

FIG.15

FIG.16

TRANSFER EFFICIENCY AT CONSTANT FREQUENCY[%] (y-axis: 0, 20, 40, 60, 80, 100)

DEVIATION IN NATURAL FREQUENCY[%] (x-axis: -20, -15, -10, -5, 0, 5, 10, 15, 20)

FIG.17

TRANSFER EFFICIENCY [%]

L1, L2, L3

0, f4, f6, f5, f3

FIG.18

MAGNETIC FIELD STRENGTH[A/m]

Legend: ◆ AkW, ■ BkW

DISTANCE FROM SHIELD END[cm]

FIG.19

MAGNETIC FIELD STRENGTH[A/m]

Legend: ◆ AkW, ■ BkW

DISTANCE FROM SHIELD END[cm]

FIG.20

ELECTRIC FIELD
STRENGTH[V/m]

DISTANCE FROM SHIELD END[cm]

FIG.21

ELECTRIC FIELD
STRENGTH[V/m]

DISTANCE FROM SHIELD END[cm]

FIG.22

FIG.23

FIG.24

FIG.25

FIG.26

O1  O2  72  P1  R1  21  L6  P2  22

73                                          74

78        L5  76  71  L7  L4  77

D1 — D2

FIG.27

70  10

66

81  85L  77  68

82L

80

86  84L  76  71  83L  79  11  87

FIG.28

FIG.29

FIG.30

FIG.31

FIG.32

R1  21  L6  22          72    P1  O1  O2          78

73                                                        74

L7          76  71  L4,L5          77

D1 ─── D2

FIG.33

10  66

73

78  77 86

FIG.34

FIG.35

FIG.36

FIG.37

FIG.38

FIG.39

FIG.40

FIG.41

FIG.42

FIG.43

FIG.44

FIG.45

FIG.46

FIG.47

FIG.48

FIG.49

FIG.50

## FIG.51

FIG.52

FIG.53

FIG.54

FIG.55

FIG.56

FIG.57

FIG.58

FIG.59

FIG.60

FIG.61

FIG.62

FIG.63

FIG.64

FIG.65

FIG.66

FIG.67

**FIG.68**

**FIG.69**

FIG.70

FIG.71

FIG.72

FIG.73

FIG.74

FIG.75

FIG.76

FIG.77

FIG.78

FIG.79

**INTERNATIONAL SEARCH REPORT**

International application No.

PCT/JP2012/061828

A.   CLASSIFICATION OF SUBJECT MATTER
*H02J17/00*(2006.01)i, *B60L11/18*(2006.01)i

According to International Patent Classification (IPC) or to both national classification and IPC

B.   FIELDS SEARCHED

Minimum documentation searched (classification system followed by classification symbols)
H02J17/00, B60L11/18

Documentation searched other than minimum documentation to the extent that such documents are included in the fields searched
Jitsuyo Shinan Koho          1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | WO 2010/058477 A1  (TOYOTA JIDOSYA KABUSHIKI KAISHA), 27 May 2010 (27.05.2010), & CN 102216110 A      & EP 2360049 A1 & US 2011/0276208 A1    & US 2011/0309790 A1 | 1-21 |
| Y | WO 2008/111547 A1  (TOYOTA JIDOSHA KABUSHIKI KAISHA), 18 September 2008 (18.09.2008), & CN 101626916 A      & EP 2119585 A1 & KR 10-2009-0118092 A  & KR 10-2011-0112479 A & RU 2009136688 A      & US 2010/0025127 A1 | 1-21 |
| Y | JP 2010-172084 A  (Saitama University), 05 August 2010 (05.08.2010), fig. 6, 13 (Family: none) | 9-11 |

[X]   Further documents are listed in the continuation of Box C.          [ ]   See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

Date of the actual completion of the international search
09 July, 2012 (09.07.12)

Date of mailing of the international search report
17 July, 2012 (17.07.12)

Name and mailing address of the ISA/
Japanese Patent Office

Facsimile No.

Authorized officer

Telephone No.

Form PCT/ISA/210 (second sheet) (July 2009)

**INTERNATIONAL SEARCH REPORT**

| International application No. |
| --- |
| PCT/JP2012/061828 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2007/129759 A1   (TOYOTA JIDOSYA KABUSHIKI KAISHA), 15 November 2007 (15.11.2007), & CN 101443209 A       & CN 102514470 A & DE 112007001145 T    & JP 2007-302086 A & US 2009/0178867 A1    & US 8205700 B2 | 1-21 |
| A | WO 2011/114208 A2   (TOYOTA JIDOSHA KABUSHIKI KAISHA), 22 September 2011 (22.09.2011), & JP 2011-193671 A | 1-21 |
| A | JP 2011-49230 A   (Saitama University), 10 March 2011 (10.03.2011), (Family: none) | 1-21 |
| A | MANOCHEHR EGHTESADI, INDUCTIVE POWER TRANSFER TO AN ELECTRIC VEHICLE-ANALYTICAL MODEL, 40TH IEEE VEHICULAR TECHNOLOGY CONFERENCE, 1990.05, P.100-104 | 1-21 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010172084 A
- JP 2011049230 A
- JP 2011193671 A